(19) Europäisches Patentamt
European Patent Office
Office européen des brevets

(11) EP 4 797 835 A1

(12) EUROPEAN PATENT APPLICATION
published in accordance with Art. 153(4) EPC

(43) Date of publication:
**26.08.2026 Bulletin 2026/35**

(21) Application number: **23962646.8**

(22) Date of filing: **27.12.2023**

(51) International Patent Classification (IPC):
***H04W 72/0446** (2023.01)* ***H04W 72/1268** (2023.01)*

(52) Cooperative Patent Classification (CPC):
**H04W 72/0446; H04W 72/1268**

(86) International application number:
**PCT/CN2023/142511**

(87) International publication number:
**WO 2025/137964 (03.07.2025 Gazette 2025/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **New H3C Technologies Co., Ltd.**
**Hangzhou, Zhejiang 310052 (CN)**

(72) Inventors:
- **KONG, Lei**
  **Beijing 100102 (CN)**
- **ZHOU, Lei**
  **Beijing 100102 (CN)**
- **ZHANG, Jun**
  **Beijing 100102 (CN)**

(74) Representative: **IPAZ**
**Parc Les Algorithmes**
**Bâtiment Platon**
**91190 Saint Aubin (FR)**

# (54) UPLINK TRANSMISSION METHOD AND APPARATUS, AND BASE STATION, UE AND STORAGE MEDIUM

(57) The embodiments of the present application relate to the technical field of mobile communications. Provided are an uplink transmission method and apparatus, and a base station, a UE and a storage medium. The method comprises: determining configuration information for uplink transmission, wherein the configuration information is used for indicating to a UE an available SSB symbol for uplink transmission, and an uplink subband is configured in the available SSB symbol; sending the configuration information to the UE; and sending uplink scheduling information to the UE, such that the UE performs uplink transmission in the available SSB symbol on the basis of the uplink scheduling information. By means of applying the solution provided in the embodiments of the present application, the uplink transmission rate of data can be improved.

S201
determining configuration information with respect to uplink transmission
S202
sending the configuration information to the UE
S203
sending uplink scheduling information to the UE so that the UE can perform uplink transmission in the available SSB symbol based on the uplink scheduling information

Fig.2



Processed by Luminess, 75001 PARIS (FR)

## Description

### Technical Field

The present disclosure relates to the field of mobile communication technology, in particular to a method, apparatus, base station, UE and storage medium for uplink transmission.

### Background

In the process of mobile communication, a base station and a UE (User Equipment) realize data transmission through wireless air interface resources.

The frame structure of the wireless air interface includes several slots, which are generally divided into DL (DownLink) slots, UL (UpLink) slots and S (Special) slots.

However, with the continuous increase of mobile communication services, in order to improve the network throughput, more downlink slots and fewer uplink slots are usually configured in the frame structure in related technologies, which results in fewer uplink slots for UE to transmit data to the base station, thus causing lower uplink transmission rate of data.

### Summary

The object of examples of the present disclosure is to provide a method, apparatus, base station, UE and storage medium for uplink transmission to improve the uplink transmission data rate. The specific technical solution is as follows:

In a first aspect, an example of the present disclosure provides an uplink transmission method applied to a base station, the method comprises:

determining configuration information with respect to uplink transmission, wherein the configuration information is to indicate an available SSB symbol of a UE (User Equipment) to perform uplink transmission, and the available SSB symbol is configured with an uplink subband;

sending the configuration information to the UE;

sending uplink scheduling information to the UE so that the UE can perform uplink transmission in the available SSB symbol based on the uplink scheduling information.

In a second aspect, an example of the present disclosure provides an uplink transmission method applied to a base station, the method comprises:

determining an available SSB symbol for a UE to perform uplink transmission based on a first schedulable SSB list;

based on the available SSB symbol, sending uplink scheduling information to the UE so that the UE can perform uplink transmission in the available SSB symbol based on the uplink scheduling information.

In a third aspect, an example of the present disclosure provides an uplink transmission method applied to a UE, the method comprises:

receiving configuration information with respect to uplink transmission sent by a base station, wherein the configuration information is to indicate an available SSB symbol for the UE to perform uplink transmission, and the available SSB symbol is configured with an uplink subband;

receiving uplink scheduling information sent by the base station;

performing uplink transmission in the available SSB symbol based on the uplink scheduling information.

In a fourth aspect, an example of the present disclosure provides an uplink transmission method applied to a base station, the method comprises:

receiving uplink scheduling information sent by a base station, wherein the uplink scheduling information is determined based on an available SSB symbol, the available SSB symbol is an SSB symbol determined by the base station based on a first schedulable SSB list, the first schedulable SSB list is generated based on a first SSB, the first SSB is: an SSB whose signal quality characterization value has been reported by the UE, the signal quality characterization value characterizes the value obtained by the UE performing signal quality measurement on a received SSB signal;

performing uplink transmission in the available SSB symbol based on the uplink scheduling information.

In a fifth aspect, an example of the present disclosure provides an uplink transmission apparatus applied to a base station, the apparatus comprises:

a configuration information determining module, to determine configuration information with respect to uplink transmission, wherein the configuration information is to indicate an available SSB symbol for a UE to perform uplink transmission, and the available SSB symbol is configured with an uplink subband;

a configuration information sending module, to send the configuration information to the UE;

a first scheduling information sending module, to send uplink scheduling information to the UE so that the UE can perform uplink transmission in the available SSB symbol based on the uplink scheduling information.

In a sixth aspect, an example of the present disclosure provides an uplink transmission apparatus applied to a base station, the apparatus comprises:

a first available SSB symbol determining module, to determine an available SSB symbol for a UE to perform uplink transmission based on a first schedulable SSB list;

a second scheduling information sending module, to send uplink scheduling information to the UE so that the UE performs uplink transmission in the available SSB symbol based on the uplink scheduling information.

In a seventh aspect, an example of the present disclosure provides an uplink transmission apparatus applied to a UE, the apparatus comprises:

a configuration information receiving module, to receive configuration information with respect to uplink transmission sent by a base station, wherein the configuration information is to indicate an available SSB symbol for the UE to perform uplink transmission, and the available SSB symbol is configured with an uplink subband;

a first scheduling information receiving module, to receive uplink scheduling information sent by the base station;

a first uplink transmission module, to perform uplink transmission in the available SSB symbol based on the uplink scheduling information.

In an eighth aspect, an example of the present disclosure provides an uplink transmission apparatus applied to a UE, the apparatus comprises:

a second scheduling information receiving module, to receive uplink scheduling information sent by a base station, wherein the uplink scheduling information is determined based on an available SSB symbol, the available SSB symbol is an SSB symbol determined by the base station based on a first schedulable SSB list, the first schedulable SSB list is generated based on a first SSB, the first SSB is: an SSB whose signal quality characterization value has been reported by the UE, the signal quality characterization value characterizes the value obtained by the UE performing signal quality measurement on a received SSB signal;

a second uplink transmission module, to perform uplink transmission in the available SSB symbol based on the uplink scheduling information.

In a ninth aspect, an example of the present disclosure provides a base station, which includes a processor and a machine-readable storage medium; the machine-readable storage medium stores machine executable instructions that are executable by the processor; the processor is caused by the machine executable instructions to implement

the method blocks described in the first or second aspect.

In a tenth aspect, an example of the present disclosure provides a UE, which includes a processor and a machine-readable storage medium; the machine-readable storage medium stores machine executable instructions that are executable by the processor; the processor is caused by the machine executable instructions to implement the method blocks described in the third or fourth aspect.

In an eleventh aspect, an example of the present disclosure provides a computer readable storage medium that stores machine executable instructions that, when called and executed by a processor, cause the processor to implement the method described in the first or second or third or fourth aspect.

In a twelfth aspect, an example of the present disclosure provides a computer program product containing instructions that, when running on a computer, causes the computer to execute the method blocks described in the first or second or third or fourth aspect.

It can be seen from the above that in the solution provided by the examples of the present disclosure, the base station can determine the configuration information with respect to uplink transmission, and the configuration information is to indicate the available SSB symbol for the UE to perform uplink transmission, after the base station sends the configuration information to the UE, the UE can learn which available SSB symbol is for performing uplink transmission; in turn, after the base station sends uplink scheduling information to the UE, the UE can perform uplink transmission based on the available SSB symbol. The SSB symbol is located in a downlink slot. It can be seen that the UE can not only perform normal uplink transmission in an uplink slot, but also perform uplink transmission based on available SSB symbol in a downlink slot originally for downlink transmission, which improves the uplink transmission rate.

**Brief Description of the Drawings**

The drawings described herein are intended to provide a further understanding of the present disclosure and form a part of it. The illustrative examples and their explanations of the present disclosure are to explain the present disclosure and do not constitute an improper limitation of the present disclosure.

Fig. 1 is a schematic diagram of a frame structure of wireless air interface provided in an example of the present disclosure;

Fig. 2 is a schematic flowchart of a first uplink transmission method provided in an example of the present disclosure;

Fig. 3 is a schematic flowchart of a second uplink transmission method provided in an example of the present disclosure;

Fig. 4 is a signaling diagram of a first uplink transmission process provided in an example of the present disclosure;

Fig. 5 is a signaling diagram of a second uplink transmission process provided in an example of the present disclosure;

Fig. 6 is a schematic diagram of available SSB symbols provided in an example of the present disclosure;

Fig. 7 is a signaling diagram of a third uplink transmission process provided in an example of the present disclosure;

Fig. 8 is a schematic diagram of an MAC control element provided in an example of the present disclosure;

Fig. 9 is a schematic diagram of an uplink subband protection window provided in an example of the present disclosure;

Fig. 10 is a schematic flowchart of a third uplink transmission method provided in an example of the present disclosure;

Fig. 11 is a schematic flowchart of a fourth uplink transmission method provided in an example of the present disclosure;

Fig. 12 is a signaling diagram of a fourth uplink transmission process provided in an example of the present disclosure;

Fig. 13 is a signaling diagram of a fifth uplink transmission process provided in an example of the present disclosure;

Fig. 14 is a schematic diagram of a method for determining an SSB beam and available SSB symbols provided in an example of the present disclosure;

Fig. 15 is a schematic structural diagram of a first uplink transmission apparatus provided in an example of the present disclosure;

Fig. 16 is a schematic structural diagram of a second uplink transmission apparatus provided in an example of the present disclosure;

Fig. 17 is a schematic structural diagram of a third uplink transmission apparatus provided in an example of the present disclosure;

Fig. 18 is a schematic structural diagram of a fourth uplink transmission apparatus provided in an example of the present disclosure;

Fig. 19 is a schematic structural diagram of a base station provided in an example of the present disclosure;

Fig. 20 is a schematic structural diagram of a UE provided in an example of the present disclosure.

## Detailed Description

In order to make the objectives, technical solutions, and advantages of the present disclosure clearer, the present disclosure will be further described below in detail with reference to the accompanying drawings and by way of examples. Obviously, the described examples are only a portion of the examples of the present disclosure, rather than all of them. All other examples obtained by those skilled in the art based on the examples of the present disclosure fall within the protection scope of the present disclosure.

First, certain concepts to be involved in the examples of the present disclosure will be described.

1. Frame structure of wireless air interface

In mobile communication, a base station and UE realize data transmission through wireless air interface resources; the frame structure of the wireless air interface defines the wireless transmission protocols between the base station and UE.

The time period occupied by the frame structure of the wireless air interface is very short. For example, in the LTE (Long Term Evolution) standards of 4G (4th Generation Mobile Communication Technology) and the NR (New Radio) standards of 5G (5th Generation Mobile Communication Technology), the time period occupied by a frame structure could be 10 ms.

2. Slot

A slot is to define the time length of a wireless channel so that the base station and UE can send and/or receive data at a specific time.

Specifically, a frame structure includes several slots, and the number of slots included in a frame structure is determined based on SCS (Sub-Carrier Spacing). For example, in the 5G NR standards, when the sub-carrier spacing is 30KHz, a frame structure can include 20 slots; When the sub-carrier spacing is 15KHz, 60KHz, and 120KHz, a frame structure can include 10, 40, and 80 slots respectively. Here, examples will not be given one by one.

Dividing a frame structure into slots is equivalent to dividing a complete time segment into several smaller time segments. In this way, the different time segments obtained by division can be used to transmit different uplink and downlink data or signaling.

According to the direction of the data transmitted in a slot, the slot can be divided into an uplink slot, a downlink slot and a special slot. The downlink slot is used for a base station to transmit data to a UE, the uplink slot is used for a UE to transmit data to a base station, and the special slot contains a protection interval for the uplink and downlink handover. The special slot can be used for a UE to transmit data to a base station, and can also be used for a UE to transmit data to a base station.

3. Symbol

The full name of the above symbol is OFDM (Orthogonal Frequency Division Multiplexing) symbol, which is the smallest unit of time domain.

A slot is divided into multiple symbols for data or signaling transmission. Specifically, a slot includes several symbols. For example, in the 5G NR standards, a slot can include 14 symbols.

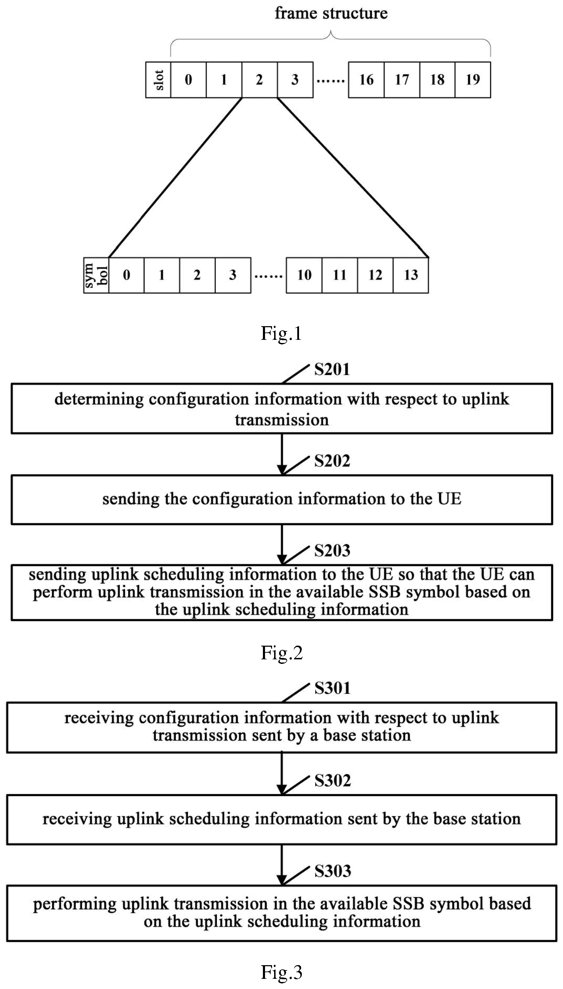

The relationship between the frame structure, slot and symbol is visually introduced below by means of Fig. 1.

Refer to Fig. 1, which is a schematic diagram of a frame structure of wireless air interface provided in an example of the present disclosure.

It can be seen that the frame structure includes 20 slots, namely slot 0 - slot 19. Each slot (taking slot 2 as an example) includes 14 symbols, namely symbol 0 - symbol 13.

4. SSB, SSB symbol

An SSB (Synchronization Signal Block) is used for synchronization between a base station and a UE. The MIB (Master Information Block) carried in an SSB is the key information of a cell. In the mobile communication system, the correct reception of an SSB sent by a base station by a UE is the basis for normal communication.

An SSB symbol refers to a symbol used to transmit an SSB in a downlink slot. A base station sends an SSB to a UE in an SSB symbol in a downlink slot, and the UE receives the SSB sent by the base station in the SSB symbol in the downlink slot.

The SSB transmitted in an SSB symbol can be a CD-SSB (Cell Defined SSB) or a NCD-SSB (Non Cell Defined SSB), which is not limited by the example of the present disclosure.

5. SBFD

SBFD (Sub-Band Full Duplex) technology is a duplex communication technology proposed in the 5G Adv (5G Advance) standards.

In the Sub-Band Full Duplex technology, frequency domain resources corresponding to a downlink slot can be divided into uplink frequency domain resources and downlink frequency domain resources, which can be called as UL subband (UpLink subband) and DL subband (DownLink subband). In this way, within a same downlink slot, the uplink and downlink subbands can be used for uplink and downlink data transmission respectively, thus achieving full duplex communication between a base station and a UE.

An uplink transmission scheme provided in an example of the present disclosure will be described in detail.

Referring to Fig. 2, which is a schematic flowchart of a first uplink transmission method provided in an example of the present disclosure, the method is applied to a base station, and comprises the following blocks S201-S203.

Block S201: determining configuration information with respect to uplink transmission.

The configuration information is to indicate an available SSB symbol for a UE to perform uplink transmission, and the available SSB symbol is configured with an uplink subband therein.

The UE is a UE with SBFD function, that is, a UE that can communicate with base stations based on SBFD technology.

The configuration information is to indicate the available SSB symbol for performing uplink transmission. In this way, the UE can determine the available SSB symbol for uplink transmission based on the received configuration information. Otherwise stated, the UE can determine which SSB symbol is an available SSB symbol for performing uplink transmission from all SSB symbols, and can also determine which SSB symbol is an available SSB symbol for performing downlink transmission and receiving an SSB.

It should be noted that after determining the configuration information, the base station can also send an SSB on an SSB symbol other than the available SSB symbol indicated in the configuration information, so that the UE can normally receive an SSB based on the SSB symbol other than the available SSB symbol above.

Block S202: sending the configuration information to the UE.

In this way, for the UE, after receiving the configuration information, it can learn the available SSB symbol with the uplink subband configured therein, which is indicated by the configuration information.

Block S203: sending uplink scheduling information to the UE so that the UE can perform uplink transmission in the available SSB symbol based on the uplink scheduling information.

The uplink scheduling information is described below.

In one case, the uplink scheduling information may include scheduling information such as available time-frequency resources and modulation coding methods when the UE performs uplink transmission.

In this case, after receiving the uplink scheduling information, the UE can perform uplink data transmission on the available SSB symbol.

It can be seen from the above that in the solution provided by the example of the present disclosure, the base station can determine the configuration information with respect to uplink transmission, which configuration information is to indicate the available SSB symbol for the UE to perform uplink transmission, after the base station sends the configuration information to the UE, the UE can learn which available SSB symbol can be used for performing uplink transmission; in turn, after the base station sends uplink scheduling information to the UE, the UE can perform uplink transmission based on the available SSB symbol. The SSB symbol is a symbol in a downlink slot. It can be seen that the UE can not only perform normal uplink transmission in an uplink slot, but also perform uplink transmission based on the available SSB symbol in a downlink slot originally used for downlink transmission, which improves the uplink transmission rate.

In addition, in the Sub-Band Full Duplex technology, an SSB symbol can be configured with an uplink subband therein. For the SSB symbol configured with an uplink subband therein, the SSB symbol can be used for downlink data transmission as well as uplink data transmission. However, if the SSB symbol is used for uplink transmission and downlink transmission at the same time, it may lead to a time-frequency resource conflict between uplink transmission and downlink transmission. It will have a negative impact on the UE's detection and measurement of the SSB in the SSB symbol, tending to make it difficult for the UE to receive the SSB sent by the base station in the SSB symbol normally, and then in turn making it difficult to synchronize cells and update system information based on the SSB, which may lead to abnormal communication between the UE and the base station.

In the solution provided in the example of the present disclosure, the available SSB symbol indicated by the configuration information is the part of the SSB symbols, among all SSB symbols, that are configured with an uplink subband therein and used for uplink transmission. In this way, while the UE performs uplink transmission based on scheduling in the available SSB symbol, it can also receive SSBs normally in the SSB symbols other than the available SSB symbol. Such, the UE can perform cell synchronization, update system information, and other operations based on the received SSB symbols, thus reducing the probability of abnormal communication caused by failure to receive the SSBs. It can be seen that the solution provided by the example of the present disclosure improves the uplink transmission rate while ensuring that the UE can receive SSBs normally. In other words, it can improve the uplink transmission rate while ensuring the stability of mobile communication.

Corresponding to the solution applied to the base station described in the example shown in Fig. 2 above, an example of the present disclosure also provides a solution applied to a UE.

Referring to Fig. 3, which is a flow schematic diagram of the second uplink transmission method provided in the example of the present disclosure, the method is applied to a UE, and comprises the following blocks S301-S303.

Block S301: receiving configuration information with respect to uplink transmission sent by a base station.

The configuration information is to indicate an available SSB symbol for the UE to perform uplink transmission, and the available SSB symbol is configured with an uplink subband therein.

Block S302: receiving uplink scheduling information sent by the base station.

Block S303: performing uplink transmission in the available SSB symbol based on the uplink scheduling information.

It can be seen from the above that in the solution provided by the example of the present disclosure, the UE can receive the configuration information with respect to uplink transmission sent by the base station, which configuration information is to indicate the available SSB symbol for the UE to perform uplink transmission, such that the UE can learn which available SSB symbol can be used for performing uplink transmission; in turn, after the base station sends the uplink scheduling information to the UE, the UE can perform uplink transmission based on the available SSB symbol. The SSB symbol is located in the downlink slot. It can be seen that the UE can not only perform normal uplink transmission in an uplink slot, but also perform uplink transmission based on the available SSB symbol in a downlink slot originally used for downlink transmission, which improves the uplink transmission rate.

Furthermore, the available SSB symbol indicated by the configuration information is the part of the SSB symbols, among all SSB symbols, that are configured with an uplink subband therein and used for uplink transmission. In this way, while the UE performs uplink transmission based on the scheduling in the available SSB symbol, it can also receive SSBs normally in the SSB symbols other than the available SSB symbol. Such, it can perform cell synchronization, update system information, and other operations based on the received SSB symbols, thus reducing the probability of abnormal communication caused by failure to receive the SSBs. It can be seen that the solution provided by the example of the present disclosure improves the uplink transmission rate while ensuring that the UE can receive the SSBs normally, that is, it can improve the uplink transmission rate while ensuring the stability of mobile communication.

The uplink transmission solutions provided by the examples of the present disclosure focuses on the information interaction between a base station and a UE, such that the UE performs uplink transmission based on an available SSB symbol. Therefore, in order to facilitate understanding, the solutions provided by the examples of the present disclosure will be specifically described below from the perspective of information interaction between the base station and the UE.

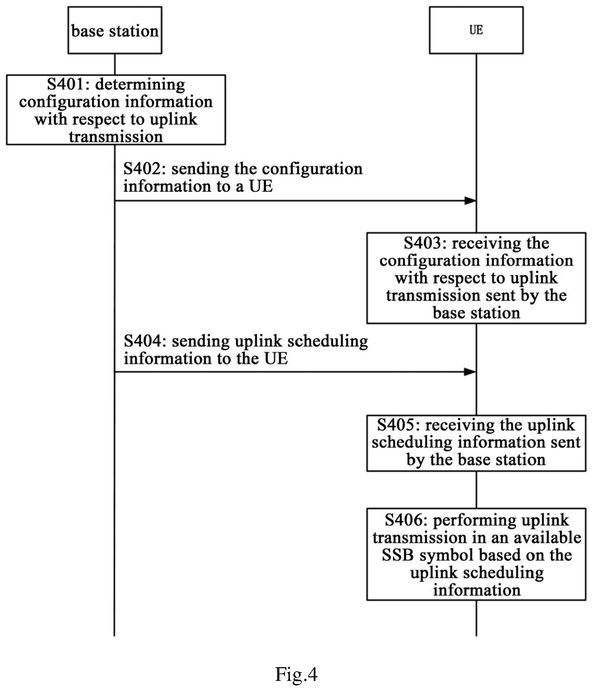

Referring to Fig. 4, which is a signaling diagram of a first uplink transmission process provided in an example of the present disclosure, the process comprises the following blocks.

Block S401: a base station determining configuration information with respect to uplink transmission.

Block S402: the base station sending the configuration information to a UE.

Block S403: the UE receiving the configuration information with respect to uplink transmission sent by the base station.

Block S404: the base station sending uplink scheduling information to the UE.

Block S405: the UE receiving the uplink scheduling information sent by the base station.

Block S406: the UE performing uplink transmission in an available SSB symbol based on the uplink scheduling information.

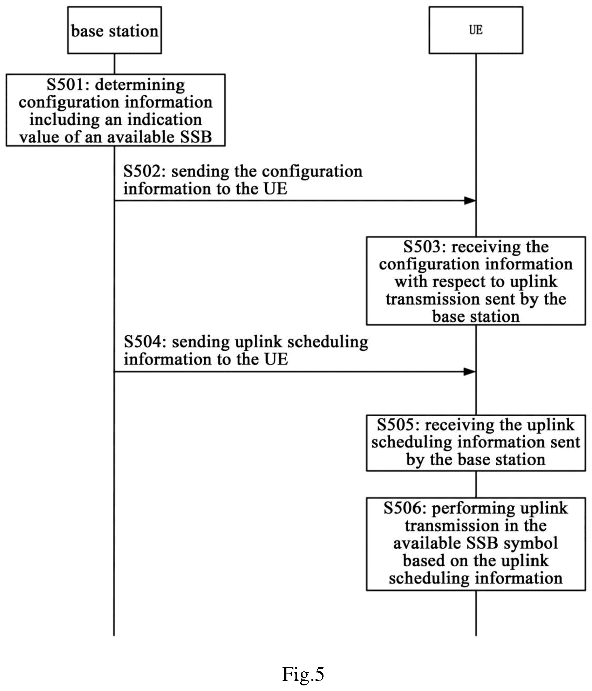

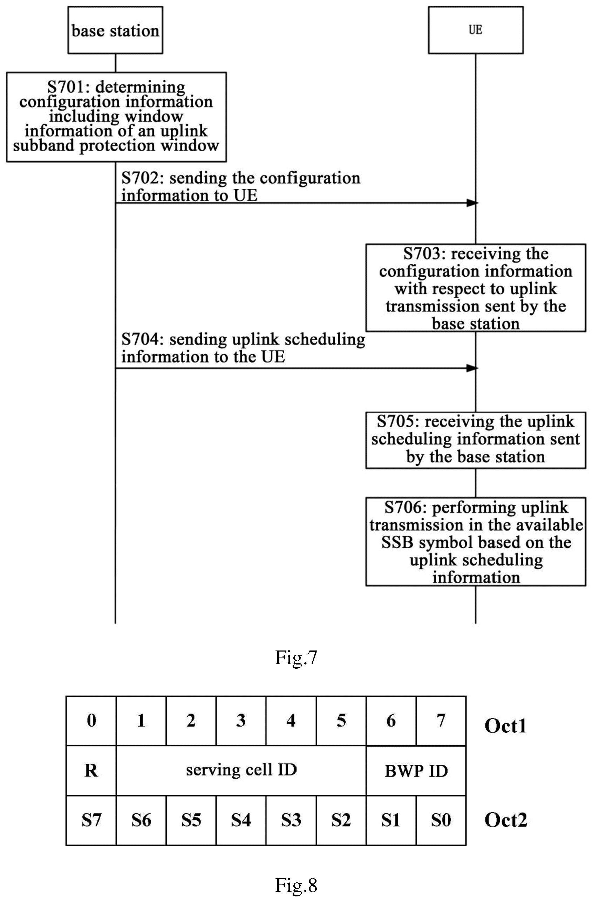

The configuration information determined by the base station is to indicate an available SSB symbol for the UE to perform uplink transmission. The base station can send the configuration information indicating the available SSB symbol to the UE in a variety of ways. Accordingly, the UE can obtain the available SSB symbol indicated by the configuration information in a variety of ways based on the received configuration information. The following is a detailed description of the examples shown in Figs. 5 and 7.

In one case, the configuration information determined by the base station can include an indication value of an available SSB. Based on this, referring to Fig. 5, which is a signaling diagram of a second uplink transmission process provided in an example of the present disclosure, the process includes the following blocks.

Block S501: the base station determines configuration information including an indication value of an available SSB.

The indication value is used to indicate whether SSB symbols included in the available SSB are all available SSB symbols.

Specifically, SSB symbols included in the SSB corresponding to a first indication value are all available SSB symbols, while SSB symbols included in the SSB corresponding to a second indication value are not available SSB symbols.

The first indication values and the second indication values can be preset by a working staff, for example, the first indication value can be 0 and the second indication value can be 1.

It can be seen that in this example, the base station selects the available SSB symbols by means of SSB as a selecting unit. In other words, it determines the available SSBs in which SSB symbols included are all configured with an uplink subband, and then it determines that all the symbols included in the available SSBs are the available SSB symbols.

In this case, for an SSB in which a part of the SSB symbols included are configured with an uplink subband and the other part of the SSB symbols included are not configured with an uplink subband, the SSB will not be determined as an available SSB, and the SSB symbols included in the SSB will not be determined as available SSB symbols.

For example, in the case where the sub-carrier spacing is 30KHz, an SSB includes four SSB symbols, two of which are configured with an uplink subband, and the other two are not configured with an uplink subband. Thus, the SSB will not be determined as an available SSB, and the SSB symbols included in the SSB will not be determined as available SSB symbols.

It can be seen from the above introduction that a base station sends an SSB to a UE in the time-frequency resources of SSB symbols. Therefore, in order to ensure that the UE can receive the SSB normally, not all of the SSB symbols configured with an upstream subband can be used for upstream transmission.

Specifically, the base station can determine candidate SSBs, select the available SSB for uplink transmission from the candidate SSBs, and then generate the configuration information containing the indication value of the available SSB.

The SSB symbols included in the candidate SSB are all configured with an uplink subband.

The method of determining candidate SSBs is first described.

A base station can determine whether an SSB symbol is configured with an uplink subband therein according to the configuration of the uplink subband and SSB. The SSB whose SSB symbols are all configured with an uplink subband is determined as a candidate SSB.

Then, the method of selecting an available SSB from candidate SSBs is described.

In one example, the base station can calculate the result of rounding the product of the number of candidate SSBs and a preset ratio as a first target number, and then select the first target number of SSBs from the candidate SSBs as the available SSBs.

The preset ratio can be 40%, 50%, and the like.

For example, if the number of candidate SSBs is 4 and the preset ratio is 50%, then the first target number is $4 \times 50\% = 2$, so the base station can select 2 SSBs from the 4 candidate SSBs as the available SSBs.

In this case, if each SSB includes 4 SSB symbols, then $2 \times 4 = 8$ SSB symbols included in the 2 selected available SSBs are the available SSB symbols.

The base station can select the first target number of available SSBs from the candidate SSBs by random selection, selection based on a preset interval, and the like, which is not limited by the example of the present disclosure.

In another example, the base station can select a preset number of SSBs from candidate SSBs as the available

SSBs.

The preset number can be set by a working staff according to experience and/or actual needs. Similarly, the base station can select the preset number of available SSBs from the candidate SSBs by random selection, selection based on a preset interval, and the like, which is not limited by the example of the present disclosure.

It can be seen that the base station can first determine the candidate SSBs in which the SSB symbols included therein are all configured with uplink subbands, which are the SSB symbols that can theoretically be used for uplink transmission. Then, the base station can select the available SSB from the candidate SSBs. The SSB symbols included in the available SSB are the SSB symbols that can be used for uplink transmission. Thus, the available SSB symbol can be accurately determined.

In this way, the configuration information determined by the base station includes an indication value of an available SSB, which can clearly indicate the SSB symbols used for uplink transmission.

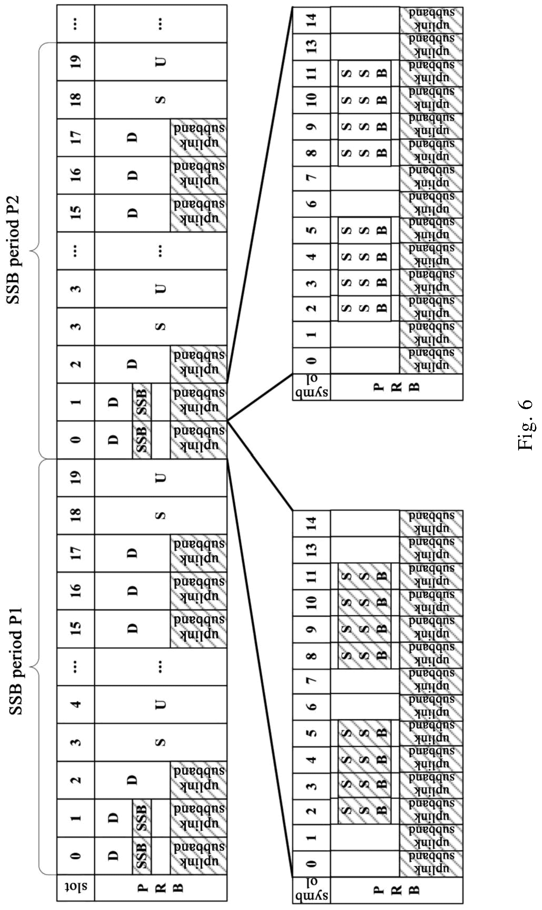

The above available SSB symbols are described more intuitively below in combination with Fig. 6.

Refer to Fig. 6, which is a schematic diagram of available SSB symbols provided in an example of the present disclosure;

Fig. 6 shows a schematic diagram of a frame structure configuration in SSB period P1 and SSB period P2, where a shaded rectangle in SSB period P1 and SSB period P2 represents SSB or uplink subband. The SSB period is 10ms (millisecond), sub-carrier spacing is 30KHz, a frame structure period is 2.5ms, and the frame structure is DDDSU. In other words, the first three slots included in a subframe are downlink slots, the fourth slot is a special slot, and the fifth slot is an uplink slot; slots 1-19 represent the slots included in the SSB period, and a PRB (Physical Resource Block) represents the frequency domain resources included in the slot.

Taking an SSB period as an example, the SSB symbols and uplink subbands included therein will be described.

Fig. 6 also shows the schematic diagram of SSB symbols and uplink subbands included in slot 0 and slot 1 in the SSB period P2, where the shaded rectangles in slot 0 and slot 1 represent available SSB symbols or uplink subbands.

It can be seen that the SSB period P2 includes 20 slots in total, namely the slot 0- slot 19, in which downlink slot 0 and downlink slot 1 carry 2 SSBs respectively, making it 4 SSBs carried in total. Each SSB includes four SSB symbols. For example, the first SSB carried by the downlink slot 0 includes SSB symbols 2-5, and the second SSB carried by the downlink slot 0 includes SSB symbols 8-11.

Thus, the downlink slot 0 of the SSB period P2 includes $4 \times 2=8$ SSB symbols in total, and the downlink slot 1 also includes $4 \times 2=8$ SSB symbols. The downlink slot 0 and the downlink slot 1 include 8+8=16 SSB symbols in total, and these 16 SSB symbols are all configured with uplink subbands.

Then, the base station can select available SSBs from the four SSBs based on the SSB expected to perform uplink transmission in the sSSB period P2. The SSB symbols included in the selected SSBs are the available SSB symbols.

For example, the base station can determine that the first two SSBs (that is, the two SSBs included in the downlink slot 0) in the SSB period P2 are selected for performing uplink transmission, and the last two SSBs (that is, the two SSBs included in the downlink slot 1) are not used for performing uplink transmission. Then, the first two SSBs in the SSB period P2 are determined to be available SSBs, and a total of eight SSB symbols, namely SSB symbols 2-5 and 8-1,1 included in the first two SSBs are the available SSB symbols for performing uplink transmission.

Block S502: the base station sends the configuration information to the UE.

Specifically, the base station can send the configuration information to the UE in the following manner.

In one example, the base station can directly send the configuration information including the indication value of the available SSB to the UE.

In another example, the base station can send a first RRC (Radio Resource Control) signaling to the UE.

The first RRC signaling carries an SSB location configuration parameter. The value of a first location in the SSB location configuration parameter is set to a first preset value, and the first location is a location corresponding to the available SSB in the SSB location configuration parameter.

In this example, the first RRC signaling is the configuration information indicating an available SSB symbol.

The SSB location configuration parameter will first be described.

The SSB location configuration parameter can include several locations. The number of the locations can be the same as the number of SSBs included in one SSB period. In this way, each location corresponds to each SSB included in one SSB period in turn.

For example, one SSB period includes four SSBs, and the SSB location configuration parameter can include four locations in total, from location 1 to location 4, wherein location 1 corresponds to the first SSB in the SSB period, location 2 corresponds to the second SSB in the SSB period, and so on.

The value of each location in the SSB location configuration parameter is to indicate whether the SSB corresponding to each location is an available SSB.

The location of which the value is set to a first preset value is the first location, and the SSB corresponding to the first location is the available SSB; the locations of which the values are set to other values are other locations, and the SSBs

corresponding to the other locations are not available SSBs.

In one case, the SSB location configuration parameter can include a second target number of bits, each bit corresponding to each SSB included in one SSB period, and the value of each bit represents whether the SSB corresponding to that bit is an available SSB.

For example, the second target number mentioned above can be 4, 8, 16, 32, 64, and so on.

In this case, the first preset value can be 0. Therefore, the bit with a value of 0 is the first location, and the corresponding SSB is an available SSB; The bit with a value of 1 is another location, and the corresponding SSB is not an available SSB.

For example, if the second target number is 4 and the 4 bits included in the SSB location configuration parameter are set to 1100, then the first 2 bits are other locations with a value set to 1, indicating that the first and second SSBs included in an SSB period (i.e. the SSBs corresponding to SSB index 0 and SSB index 1) are not available SSBs; The last two bits are the first location with a value set to 0, indicating that the third and fourth SSBs included in an SSB period (i.e. the SSB corresponding to SSB index 2 and SSB index 3) are available SSBs.

The frequency domain resources for all SSBs are the same, only the slots they are located in are different in the time domain, and the locations of SSBs in each slot are fixed. Therefore, by sending the above SSB location configuration parameter to the UE, the UE can learn the available SSBs indicated by the SSB location configuration parameter, and thus determine that the SSB symbols included in the available SSBs are the available SSB symbols for uplink transmission.

In this way, the base station can indicate the available SSB by setting the SSB location configuration parameter of the first RRC signaling, and then send the first RRC signaling to the UE to enable the UE to learn the available SSB, thereby enabling the UE to learn the available SSB symbol included in the available SSB, without the need for other additional configuration, thus improving the efficiency of information exchange between the base station and the UE.

Block S503: the UE receives the configuration information with respect to uplink transmission sent by the base station.

The above configuration information includes: the indication value of an available SSB, which is used to indicate whether the SSB symbols included in the available SSB are all available SSB symbols.

In this case, the UE can determine the available SSB based on the indication value included in the above configuration information, thereby determining that the SSB symbols included in the available SSB are the available SSB symbols.

In this way, the UE can conveniently determine the available SSB symbols for uplink transmission based on the indication value of an available SSB included in the configuration information sent by the base station.

From block S502, it can be seen that the base station can send a first RRC signaling indicating the available SSB symbols to the UE. In view of this:

In one example, the configuration information received by the UE can be the first RRC signaling.

In this case, the available SSB symbols mentioned above are the SSB symbols included in the SSB corresponding to a second location in the first RRC signaling, and the second location is a location where the value in the SSB location configuration parameter is the first preset value.

As mentioned above, the SSB corresponding to the location the value of which is the first preset value in the SSB location configuration parameter is an available SSB, and the SSB symbols included in the available SSB are the available SSB symbols. In this way, the UE can determine the SSB symbols included in the SSB corresponding to the second location within each SSB period as the available SSB symbols.

It can be seen that UE can conveniently determine the available SSB symbols based on the SSB location configuration parameter of the first RRC signaling.

Block S504: the base station sends uplink scheduling information to the UE.

Block S505: the UE receives the uplink scheduling information sent by the base station.

Block S506: the UE performs uplink transmission in the available SSB symbol based on the uplink scheduling information.

Specifically, the UE can transmit PUCCH (Physical Uplink Control Channel), PUSCH (Physical Uplink Shared Channel), SRS (Sounding Reference Signal), and PRACH (Physical Random Access Channel) in the uplink subband in a determined SSB symbol.

It can be seen that in this example, after determining the SSB symbols for the UE to perform uplink transmission, the base station is able to not send the SSBs on the determined SSB symbols, and can synchronize the indication value of the available SSBs including the available SSB symbols to the UE. Therefore, for the UE, based on the received indication value, the UE can determine the available SSBs and the available SSB symbols included therein, and thus is able to not receive the SSBs in the available SSB symbols, but to perform uplink transmission; At the same time, the UE can also receive SSBs normally in other SSB symbols other than the available SSB symbols, so that it can perform cell synchronization, update system information, and other operations based on the received SSBs, thus reducing the probability of abnormal communication caused by not receiving SSBs. It can be seen that this improves the uplink transmission rate while ensuring a normal reception of SSB, that is, it can improve the uplink transmission rate while

ensuring the stability of mobile communication.

Preferably, this example can be used for scenarios where the uplink subband is semi statically configured.

As mentioned earlier, in the SBFD technology, an uplink subband can be configured in the SSB symbols included in a downlink slot. The configuration mode of the uplink subband can be divided into semi static configuration and dynamic configuration.

For a semi statically configured uplink subband, its time-frequency resource location can be preconfigured through the RRC signaling, and the time-frequency resource location of an SSB symbol is also preconfigured. Therefore, the base station can determine whether there is resource overlap between the uplink subband and the SSB symbol, and in turn can determine the SSB symbol with resource overlap with the uplink subband. The SSB with all SSB symbols configured with an uplink subband is determined as a candidate SSB, and the available SSB is selected from the candidate SSB. In this scenario, the base station does not need to consider the overlapping relationship between uplink subbands and SSB symbols in frequency domain resources.

In another case, the configuration information determined by the base station can include window information of an uplink subband protection window. Based on this, referring to Fig. 7, which is a signaling diagram of a third uplink transmission process provided in an example of the present disclosure, the process includes the following blocks.

Block S701: the base station determines configuration information including window information of an uplink subband protection window.

In the SSB symbols located in the uplink subband protection window and configured with an uplink subband, the priority of uplink transmission is higher than that of downlink transmission.

That is, for the UE, it will perform uplink transmission according to the schedule in the SSB symbol configured with the uplink subband and located in the uplink subband protection window, rather than downlink transmission.

The window information of the uplink subband protection window is described below in detail.

In one example, the window information may include window identification, window type and window location information.

The above window identification can be any information used to identify the uplink subband protection window, such as a window ID and a window serial number.

The window type is to indicate the types of uplink subband protection windows, which can be divided into periodic protection windows, semi continuous protection windows and aperiodic protection windows.

The above window location information can be any information to indicate the location of the uplink subband protection window, which varies according to the window type, and will be described together with the window type below.

The above different types of uplink subband protection windows and the location information of the uplink subband protection are described below respectively.

1. Periodic protection window

A periodic protection window refers to the window that performs priority protection of the uplink subbands according to the window period. That is, the periodic protection window takes the window period as the protection unit, and one or more periodic protection windows can be set on each window period. The window period is to describe the protection period of the periodic protection window, which can be expressed in slots.

For example, if the sub-carrier spacing is 30KHz and the SSB period is 10ms, the window period can be 20ms. In other words, the window period is 40 slots.

The window location information of the periodic protection window may include: a period offset value representing a window period and an offset, a starting symbol of the window in a starting slot, and a window length.

The above period offset value includes the window period and the window offset, wherein window offset represents the starting slot of the protection window within the frame structure.

The above window length can be expressed in slot as its unit.

In this example, the base station and the UE can determine a starting SFN (System Frame Number) and a starting slot of the periodic protection window based on the above window location information at the MAC (Media Access Control) layer, and in turn determine the location of the periodic protection window based on the determined starting SFN, the starting slot, and the window length included in the window location information.

The ways of determining the starting SFN (System Frame Number) and the starting slot of the periodic protection window based on the above window location information will be described below.

First, the starting SFN of the periodic protection window can be calculated using the following Expression (1).

$$\text{numberOfSlotsPerFrame} \times \text{SFN1} + \text{slot number in the frame} = [(\text{numberOfSlotsPerFrame} \times \text{SFN}_{start} + \text{offset}) + \text{N} \times \text{periodicity}]\text{modulo}\ (1024 \times \text{numberOfSlotsPerFrame}) \quad (1)$$

wherein numberOfSlotsPerFrame represents a total number of slots per frame, SFN1 represents the starting SFN, slot

number in the frame represents a starting slot of the above periodic protection window, $SFN_{start}$ represents a system frame number that takes effect after the protection window configuration or reconfiguration; for example, it can be the next SFN of the SFN corresponding to the frame structure carrying the above window information; periodicity represents the window period included in the period offset value, offset represents the window offset included in the period offset value, N represents a serial number of the protection period, and modulo represents the modulo operation.

In the above Expression (1), other parameters except SFN1 and slot number in the frame are known parameters.

Specifically, the slot number in the frame and offset in the expression can be ignored first, and SFN1 can be solved according to other remaining parameters, namely:

$$\text{numberOfSlotsPerFrame} \times \text{SFN1} = [(\text{numberOfSlotsPerFrame} \times \text{SFN}_{start}) + N \times \text{periodicity}]\,\text{modulo}\,(1024 \times \text{numberOfSlotsPerFrame}) \qquad (2)$$

At this time, in Expression (2), all parameters except SFN1 are known, so SFN1 can be calculated directly.

For example, if numberOfSlotsPerFrame is 20, $SFN_{start}$ is 4, periodicity is 40, and the protection period serial number N is 2, the following results are obtained when the above parameters are brought into the expression:

$$20 \times \text{SFN1} = [(20 \times 4) + 2 \times 40]\,\text{modulo}\,(1024 \times 20)$$

That is, 20 × SFN1=160, then SFN1=8. In other words, the starting SFN of the periodic protection window in the second protection period is 8.

After the starting SFN is calculated, the above offset and the calculated SFN1 can be brought into the Expression (1) to calculate the starting slot of the periodic protection window.

For example, if offset=2 and SFN1=8 are brought into Expression (1), the following results can be obtained:

$$20 \times 8 + \text{slot number in the frame} = [(20 \times 4) + 2 \times 40 + 2]\,\text{modulo}\,(1024 \times 20)$$

That is, 160+slot number in the frame=160+2, then slot number in the frame=2. In other words, the starting slot of the periodic protection window in the second protection period in the starting SFN is 2.

It can be seen from the above that the above periodic offset value, the starting symbol and in the starting slot the window length of the window can comprehensively and accurately describe the location of the periodic protection window, such that after the base station synchronizes the window location information including the above periodic offset value, the starting symbol and the window length to the UE, the UE can accurately determine the location of the protection window based on the received window location information.

2. Semi-continuous protection window

The concept of semi-continuous protection window is similar to that of the periodic protection window. It is also a window that performing priority protection for the uplink subbands according to the window period. The window location information also includes: a period offset value representing a window period and an offset, a starting symbol of the window in a starting slot, and a window length.

Compared with the periodic protection window, if the upper subband protection window is a semi-continuous protection window, the configuration information to indicate the available the SSB symbol also includes: activation indication information.

The activation indication information is to indicate whether the semi-continuous protection window is activated.

In this way, whether the uplink subband protection window is activated can be flexibly configured by setting the activation indication information, which improves the flexibility when indicating the available SSB symbol based on uplink subband protection window.

In one case, the above activation indication information is: a first MAC control element, which includes: a MAC subheader, an identification of a serving cell on which the MAC control element acts, an identification of a BWP (bandwidth part) on which the MAC control element acts, and a characterization value of whether respective uplink subband protection window is activated.

Specifically, the above MAC subheader can be an MAC subheader containing an eLCID to identify the MAC control element; The identification of the above serving cell, the identification of the active BWP and the characterization value of whether the uplink subband protection window is activated are described by a fixed length field.

A specific example of the data format of the first MAC control element is described below by way of Fig. 8.

Refer to Fig. 8, which is a schematic diagram of an MAC control element provided in the example of the present disclosure.

It can be seen that the first MAC control element consists of Oct1 and Oct2 bytes. The meanings of the fields in Oct1 are as follows:

a. R is a reserved field, whose meaning can be set according to the subsequent new business requirements.

b. A serving cell ID is the ID of the serving cell on which the MAC control element acts. It is to indicate the serving cell on which the MAC control element acts.

c. A partial bandwidth ID (BWP ID) is the ID of the partial bandwidth on which the MAC control element acts. It is to indicate the partial bandwidth on which the MAC control element acts.

In Oct2, S0-S7 corresponds to respective semi-continuous protection window, where S0 can correspond to the semi-continuous protection window with the smallest window ID, S1 can correspond to the semi-continuous protection window with the second smallest window ID, and so on.

The value of S0-S7 indicates whether the corresponding semi-continuous protection window is activated.

For example, the value of S1 is 1, which means that the semi-continuous protection window corresponding to S1 is activated; The value of S3 is 0, which means that the semi-continuous protection window corresponding to S3 is not activated, which can also be called deactivated.

It can be seen that the information included in the first MAC control element can clearly indicate the activation of the uplink subband protection window.

The determining method of the starting SFN and the starting slot of the semi-continuous protection window are described below.

The determining method of the starting SFN and the starting slot of the semi-continuous protection window is similar to that of the periodic window, which can also be calculated by the above Expression (1) and Expression (2). The only difference is that when calculating the starting SFN and the starting slot of the semi-continuous protection window, the $SFN_{start}$ in Expression (1) and Expression (2) indicates the next SFN of the SFN sent by the UE and received by the base station with respect to the HARQ ACK (mixed ARQ acknowledgement message) of the MAC control element.

3. Aperiodic protection window

An aperiodic protection window does not have the concept of protection period. In other words, an aperiodic protection window takes a single SSB period as a protection unit, and each SSB period can be set with one or more aperiodic protection windows.

In one case, the window location information of an aperiodic protection window may include a starting symbol in a starting slot and the window length of the window.

In this way, based on the starting symbol in the starting slot and window length of the window, a stop symbol of the window can be determined, and in turn the window location can be determined based on the above starting symbol and stop symbol.

In another case, the window location information of the aperiodic protection window can include the starting symbol of the window's starting slot and the stop symbol of the window.

Furthermore, if the upper subband protection window is an aperiodic protection window, the configuration information to indicate the available SSB symbol can also includes: activation indication information.

The activation indication information is to indicate whether the aperiodic protection window is activated.

In this way, whether the above aperiodic protection window is activated can be flexibly configured by setting the activation indication information, which improves the flexibility when indicating available SSB symbols based on uplink subband protection window.

The above activation indication information can be a first DCI (Downlink Control Information) parameter, which includes a characterization value of whether the uplink subband protection window is activated.

The above DCI parameter can belong to Scheduling DCI parameters or Group common DCI parameters.

Specifically, the above DCI parameter can be ulSbfdProtectWindowIndicator, and the number of bits occupied by this parameter is equal to the number of aperiodic protection windows. In ulSbfdProtectWindowIndicator, the lowest order indicates the aperiodic protection window with the smallest window ID, and the second lowest order indicates the aperiodic protection window with the second smallest window ID, and so on. The value of each bit contained in the ulSbfdProtectWindowIndicator indicates whether the corresponding aperiodic protection window is activated. A value of 1 indicates that the aperiodic protection window is activated, and a value of 0 indicates that the aperiodic protection window is not

activated or deactivated.

For example, if the DCI parameter ulSbfdProtectWindowIndicator is 1111000, it means that the four aperiodic protection windows with the largest window ID are activated, and the four aperiodic protection windows with the smallest window ID are not activated or deactivated.

The effective time of the activation or deactivation of the aperiodic protection window is the time when the UE receives the DCI parameter, and the activation or deactivation of the aperiodic protection window will take effect after this time.

For example, when the UE receives the DCI parameter at time t1, it determines that the DCI parameter indicates that the aperiodic protection window W1 is deactivated, then the aperiodic protection windows W1 received by the UE after time t1 are all in the deactivated state.

In this way, the base station can flexibly indicate whether the uplink subband protection window is activated by setting the first DCI parameter. In addition, the DCI parameter indicates whether the uplink subband protection window is activated by means of the characterization value, which requires less byte, such that the data volume of the DCI parameter is smaller, thus reducing the data volume of the information that the base station needs to send to the UE.

It can be seen that the window identification, window type and window location information describe the characteristics of the uplink subband protection window in many aspects, and based on the above information, the uplink subband protection window can be more accurately determined.

Block S702: the base station sends the configuration information to UE.

Block S703: the UE receives the configuration information with respect to uplink transmission sent by the base station.

The above configuration information includes: window information of an uplink subband protection window.

In one case, if the uplink subband protection window is the semi-continuous protection window or the aperiodic protection window, the configuration information can also include the activation indication information.

Block S704: the base station sends uplink scheduling information to the UE.

Block S705: the UE receives the uplink scheduling information sent by the base station.

Block S706: the UE performs uplink transmission in the available SSB symbol based on the uplink scheduling information.

The above available SSB symbol is located in the uplink subband protection window indicated by the window information and is configured with an uplink subband.

Specifically, the UE can transmit PUCCH, PUSCH, SRS, and PRACH in the uplink subband of the available SSB symbol.

The UE can determine the available SSB symbol in the following ways.

In one example, when the configuration information does not include the activation indication information, the UE can directly determine the SSB symbol located in the uplink subband protection window indicated by the window information and configured with the uplink subband as the available SSB symbol for uplink transmission.

In another example, when the configuration information includes the activation indication information, the UE can determine the available SSB symbol located in a first window and configured with the uplink subband as the available SSB symbol for uplink transmission.

The first window is an activated window indicated by the activation indication information, and the first window belongs to the uplink subband protection window indicated by the window information.

In this way, the UE only determines the available SSB symbol in the first window which is indicated as activated by the activation indication information. With the change of the activation indication information sent by the base station, the available SSB symbol determined by the UE can also be changed accordingly, thus improving the flexibility in determining the SSB symbols.

In this example, the configuration information received by the UE includes the window information of the uplink subband protection window, such that the SSB symbol located in the uplink subband protection window and configured with the uplink subband can be accurately determined based on the window information. Further, after receiving the uplink scheduling information sent by the base station, the UE can accurately determine the SSB symbol located in the uplink subband protection window indicated by the window information and configured with the uplink subband, and performs uplink transmission based on the determined SSB symbol.

It can be seen from the above that the priority of the uplink transmission is higher than that of the downlink transmission in the SSB symbol configured with uplink subband and located in the uplink subband protection window. That is, for the UE, the UE will perform uplink transmission according to scheduling in the SSB symbol configured with uplink subband and located in the uplink subband protection window, rather than downlink transmission. It can be seen that the UE can not only perform normal uplink transmission in the uplink slot, but also perform uplink transmission in the downlink slot originally for downlink transmission, which improves the uplink transmission rate.

In addition, the UE can also perform normal downlink transmission in SSB symbols outside the uplink subband protection window in the downlink slot. In other words, while performing uplink transmission according to scheduling in the

SSB symbols located in the uplink subband protection window, the UE can also receive the SSBs in the SSB symbols located outside the uplink subband protection window, which ensures the synchronization between the UE and the base station. The UE also receive the MIB, thus reducing the probability of abnormal communication due to the failure to receive the SSBs. It can be seen that this improves the uplink transmission rate while ensuring a normal reception of SSBs, that is, it can improve the uplink transmission rate while ensuring the stability of mobile communication.

It should be noted that in this example, if the configuration of the uplink subband protection window covers all the periods of an SSB, the UE will not be able to receive the SSB normally.

Therefore, the uplink subband protection window can be reasonably set to cover only a part of the SSBs, such that the UE can normally receive SSBs in SSB symbols outside the uplink subband protection window.

A specific example of configuring the uplink subband protection window is described below.

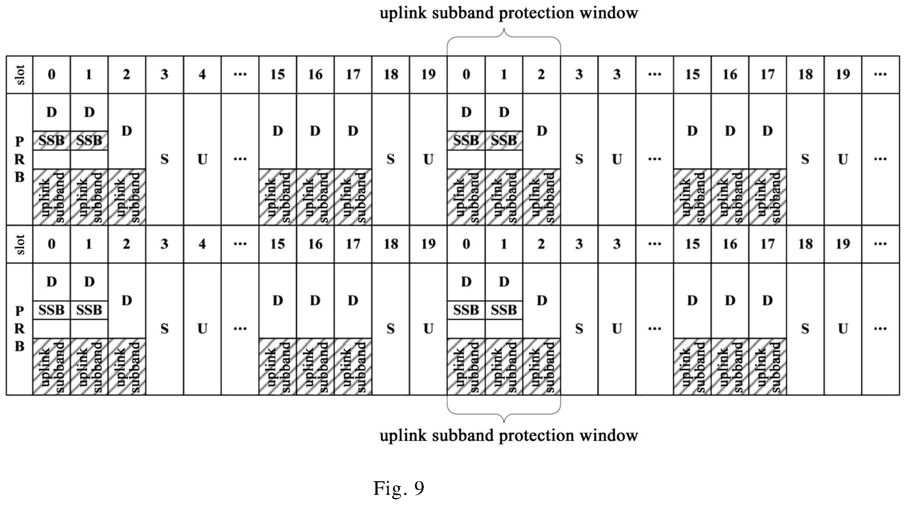

Refer to Fig. 9, which is a schematic diagram of an uplink subband protection window provided in an example of the present disclosure.

In Fig. 9, a shaded rectangle represents an SSB or an uplink subband, the SSB period is 10ms, the sub-carrier spacing is 30KHz, the frame structure period is 2.5ms, and the frame structure is DDDSU, that is, the first three slots included in one subframe are downlink slots, the fourth slot is the special slot, and the fifth slot is the uplink slot; slots 1-19 represent all slots included in the SSB period, and PRB represents the frequency domain resources included in the slot.

The uplink subband protection window shown in Fig. 9 is a periodic protection window, and the window period is configured as 20ms, that is, a batch of uplink subband protection windows are set every two SSB periods; The window offset of the uplink subband protection window is set to 0, and the starting symbol in the starting slot is 0; The length of the uplink subband protection window is 3 slots. Since one slot includes 14 symbols, the length of the uplink subband protection window can also be called $3 \times 14=42$ symbols.

It can be seen that during each window period, there are a total of 4 slots carrying SSBs, each slot carries 2 SSBs, and a total of 8 SSBs are carried. The SSB symbols occupied by the four SSBs carried in two slots are located within the uplink subband protection window, and the SSB symbols occupied by the four SSBs carried in two slots are located outside the uplink subband protection window. In other words, within each window period, the uplink subband protection window covers 50% of the SSB symbols.

In this way, the UE can perform uplink transmission based on 50% of the available SSB symbols located within the uplink subband protection window, and receive the SSBs normally based on the remaining 50% of the SSB symbols located outside the uplink subband protection window.

The data format of the window information provided in this example is described below.

Specifically, a new RRC configuration parameter ulSbfdProtectWindow can be introduced into the RRC signaling, which is to configure the window information of each uplink subband protection window. The data format of the configuration parameter ulSbfdProtectWindow is as follows:

```
ulSbfdProtectWindow ::= Sequence {
ulSbfdProtectWindowID integer（0…maxNrofUlSbfdProtectWindow-1）
resourceType Enumerated {Periodic, Aperiodic, Semi-persistent}
periodicityAndOffset :: = choice {
    slots4                INTEGER (0..3),
    slots5                INTEGER (0..4),
    slots8                INTEGER (0..7),
    slots10               INTEGER (0..9),
    slots16               INTEGER (0..15),
    slots20               INTEGER (0..19),
    slots32               INTEGER (0..31),
    slots40               INTEGER (0..39),
    slots64               INTEGER (0..63),
    slots80               INTEGER (0..79),
    slots160              INTEGER (0..159),
    slots320              INTEGER (0..319),
    slots640              INTEGER (0..639),
    ...
}
startOfSymbol    INTEGER (0..13),
LengthOfWindowInSymbol Integer(1…maxNrofSlots*maxNrofSymbols);
}
```

Where, ulSbfdProtectWindowID represents the window identification; maxNrofUlSbfdProtectWindow represents the maximum number of uplink subband protection windows that can be configured, and this parameter can be configured as 1, 2, 4, 8, and the like; resourceType Enumerated represents the window type; periodicityAndOffset

represents the window period offset value, specifically, the parameters below periodicityAndOffset are the window period and window offset to be selected, where slots 4, slots 5... represent the window period, and INTEGER (0.. 3), INTEGER (0.. 4)... represent the period offset available for selection; startOfSymbol represents the starting symbol of the uplink subband protection window in the starting slot, and INTEGER (0.. 13) represents the starting symbol available for selection; LengthOfWindowInSymbol Integer represents the window length; maxNrofSlots represents the maximum number of slots included in the frame structure, and maxNrofSymbols represents the maximum number of symbols included in the slot.

The window length can be expressed in symbols, and its maximum value is the product of the maximum number of slots and the maximum number of symbols.

In this way, the base station sends an RRC signaling including the above RRC configuration parameter ulSbfdProtectWindow to the UE. The UE can obtain the detailed information of the uplink subband protection window based on the configuration parameters included in the received RRC signaling.

It should be noted that if the window type of the uplink subband protection window is semi-continuous protection window, the base station needs to send the RRC signaling including the above RRC configuration parameters along with the first MAC control element to the UE, such that the UE can determine the activation status of the semi-continuous protection window based on the first MAC control element; If the window type of the uplink subband protection window is aperiodic protection window, the base station needs to send the RRC signaling including the above RRC configuration parameters along with the first DCI parameter to the UE, such that the UE can determine the activation status of the aperiodic protection window based on the above RRC configuration parameters and the first DCI parameter.

In the solutions provided in the present disclosure, the base station can maintain a schedulable SSB list for each UE, and determine the available SSB symbol based on the schedulable SSB list. In this way, after the base station sends the uplink scheduling information to the UE, the UE can perform uplink transmission in the available SSB symbol based on the scheduling information. In view of the above situation, an example of the present disclosure provides a third uplink transmission method.

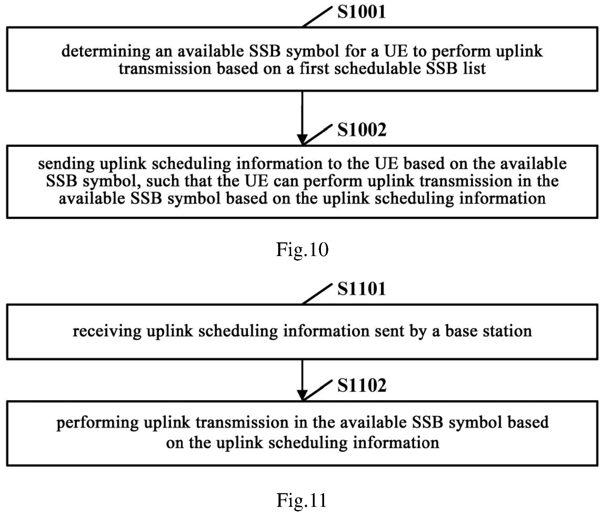

Referring to Fig. 10, which is a schematic flowchart of a third uplink transmission method provided in an example of the present disclosure, the method is applied to a base station, and comprises the following blocks.

Block S1001: determining an available SSB symbol for a UE to perform uplink transmission based on a first schedulable SSB list.

The first schedulable SSB list can be generated based on a first SSB. The first SSB is: the SSB whose signal quality characterization value has been reported by the UE, and the signal quality characterization value characterizes the value obtained by the UE performing signal quality measurement on the received SSB signal.

In this way, the signal quality characterization value of the SSB signal received by the UE is taken into account when generating the first schedulable SSB list, such that the signal quality characterization value of the SSB signal received by the UE is taken into account when determining the available SSB symbol based on the first schedulable SSB list, thus making the determination of an SSB symbol more reasonable.

The signal quality characterization value of the above SSB signal is first described.

In the mobile communication system, several SSBs can be configured. Each SSB corresponds to a wide beam, which can be called an SSB beam. Each SSB beam covers different areas. At a certain time, if a UE is located in the area covered by a certain SSB beam, the SSB signal strength corresponding to this SSB beam and measured by the UE is strong, and the signal quality is good; The SSB signal strength corresponding to other SSB beams and measured by this UE is weak, and the signal quality is poor.

Specifically, the signal quality characterization value can be the value obtained by the UE performing measurements on the RSRP (Reference Signal Receiving Power), RSSI (Received Signal Strength Indication) of the SSB beam corresponding to the received SSB.

The method of generating the first schedulable SSB list based on the first SSB is described below.

In a first manner, if a first SSB includes the SSB corresponding to a first quality characterization value, the base station can determine, based on the first SSB, a second SSB whose signal quality characterization value is not reported by the UE, and then directly generate the first schedulable SSB list containing the SSB index of the second SSB. The first quality characterization value is the foremost first number of characterization values in the signal quality characterization values reported by the UE, sorted from the largest to the smallest.

Among all the preconfigured SSBs, the base station can determine the SSBs other than the first SSB as the second SBB, and then generate the first schedulable SSB list containing the SSB index of the second SSB. In addition, the SSB indexes in the first schedulable SSB list are sorted from smallest to largest.

For example, if the base station determines that the SSB index corresponding to the second SBB in all SSBs except the first SSB is [SSB4, SSB2, SSB5], the first schedulable SSB list generated can be [SSB2, SSB4, SSB5], where the list indexes of SSB2, SSB4, and SSB5 are 0, 1, and 2 respectively.

It can be seen that in the first schedulable SSB list, the list index is related to the SSB index. The smaller the SSB index, the smaller the list index.

The first SSB is the SSB with higher signal quality characterization value measured by the UE, and the second

SSB is the SSB whose signal quality characterization value is not reported by the UE, that is, the second SSB is the SSB with a lower signal quality characterization value.

Thus, the base station generates the first schedulable SSB list containing the SSB index of the second SSB, so that when the second SSB is selected from the first schedulable SSB list later, the selected second SSB is the SSB with a lower signal quality characterization value, and in turn the SSB symbol occupied by the second SSB is used as the SSB symbol for performing uplink transmission. In this way, the SSB symbols occupied by the SSBs with higher signal quality characterization value off the first schedulable SSB list can still be used to receive the SSBs. It can be seen that this improves the uplink transmission rate while ensuring a normal reception of the SSBs, that is, it can improve the uplink transmission rate while ensuring the stability of mobile communication.

In a second manner, if the first SSB includes the SSB corresponding to all signal quality characterization values measured by the UE, the base station can determine a third SSB corresponding to the second signal quality characterization value, and generate the first schedulable SSB list containing the SSB index of the third SSB.

The second signal quality characterization value is the lowest second number of characterization values among the signal quality characterization values reported by the UE. The SSB indexes included in the first schedulable SSB list are sorted from smallest to largest according to the corresponding signal quality characterization values of SSBs.

For example, the base station determines that the SSB indexes corresponding to the third SBB are [SSB4, SSB2, SSB5], and the signal quality characterization values corresponding to each third SSB are S1, S2, and S3, where S3 < S2 < S1, then the first schedulable SSB list generated is [SSB5, SSB2, SSB4], where the list indexes of SSB2, SSB4, and SSB5 are 1, 2, and 0, respectively.

It can be seen that in the first schedulable SSB list, the list index is not related to the SSB index, but only to the signal quality characterization value corresponding to the SSB index. The smaller the signal quality characterization value, the smaller the list index.

The third SSB is the SSB corresponding to the lowest second number of the second signal quality characterization values among the signal quality characterization values reported by the UE, that is, the third SSB is the SSB with a lower signal quality characterization value.

Thus, the base station generates the first schedulable SSB list containing the SSB index of the third SSB, so that the third SSB is selected from the first schedulable SSB list later, the selected third SSB is the SSB with a lower signal quality characterization value, and the SSB symbol occupied by the third SSB is used as the SSB symbol for uplink transmission. In this way, the SSB symbols occupied by the SSBs with higher signal quality characterization values off the first schedulable SSB list can still be used to receive the SSBs. It can be seen that this improves the uplink transmission rate while ensuring a normal reception of the SSBs, that is, it can improve the uplink transmission rate while ensuring the stability of mobile communication.

It should be noted that the base station can update the first schedulable SSB list according to the signal quality characterization value of the SSB constantly reported by the UE.

The manner of determining the available SSB symbol based on the first schedulable SSB list is described below

In one example, a fourth SSB with the lowest list index can be selected from the first schedulable SSB list, and based on the fourth SSB, the available SSB symbol for performing uplink transmission by the UE can be determined.

It can be seen from the above description that the first schedulable SSB list can be generated in many ways. The following is a case by case description:

In a first case, if the first schedulable SSB list is a list containing the SSB index of the second SSB, since the list index is related to the SSB index and a smaller SSB index corresponds to a smaller the list index, the fourth SSB with a smallest list index is selected from the first schedulable SSB list, that is, the smallest SSB index is selected from the first schedulable SSB list.

In this way, an SSB can be selected from the first schedulable SSB list starting from the smallest SSB index.

In a second case, if the first schedulable SSB list is a list containing the SSB index of the third SSB, since the list index is related to the signal quality characterization value instead of the SSB index and a smaller signal quality characterization value corresponds to a smaller the list index, the fourth SSB with a smallest list index is selected from the first schedulable SSB list, that is, the SSB index with the smallest signal quality characterization value is selected from the first schedulable SSB list.

In this way, It means that a corresponding SSB with the weakest signal is selected from the first schedulable SSB list, and the SSB symbol occupied by the selected SSB is determined as the available SSB symbol. The SSB symbols occupied by other corresponding SSBs with larger signal quality characterization values are still used to receive the SSBs, which improves the uplink transmission rate while ensuring the normal reception of the SSBs, that is, it can improve the uplink transmission rate while ensuring the stability of mobile communication.

In another example, a fifth SSB can be randomly selected from the first schedulable SSB list, and based on the fifth SSB, an available SSB symbol for performing uplink transmission by the UE can be determined.

Block S1002: sending uplink scheduling information to the UE based on the available SSB symbol, such that the UE can perform uplink transmission in the available SSB symbol based on the uplink scheduling information.

It can be seen from the previous description that, the uplink scheduling information may include information such as available time-frequency resources and modulation coding methods when that UE performs uplink transmission.

The UE can determine the SSB symbol corresponding to the above available time-frequency resources as the available SSB symbol, and in turn perform uplink data transmission on the available SSB symbol according to the uplink modulation coding method and other information indicated by the uplink scheduling information.

Specifically, the UE can transmit PUSCH in the uplink subbands of the available SSB symbol.

It can be seen from the above that in the solution provided by the examples of the present disclosure, the base station can determine the available SSB symbol for the UE to perform uplink transmission based on the first schedulable SSB list, and can send the uplink scheduling information to the UE based on the available SSB symbol; Thus, for UE, it can perform uplink transmission in available SSB symbol based on the uplink scheduling information. The SSB symbol is located in the downlink slot. It can be seen that the UE can not only perform normal uplink transmission in the uplink slot, but also perform uplink transmission based on available SSB symbol in the downlink slot originally for downlink transmission, which improves the uplink transmission rate.

In addition, the first schedulable SSB list is generated based on the signal quality characterization value of the SSB beam corresponding to the SSB received by the UE, which reflects the signal quality of the SSB beam corresponding to the SSB received by the UE. In this way, the SSB symbol for uplink transmission can be selected from the SSB symbols occupied by the SSB based on the signal quality of the SSB beam corresponding to the SSB received by the UE; the selected SSB symbol is related with the signal quality of the SSB beam corresponding to the SSB received by the UE, which improves the stability of mobile communication.

Corresponding to the solution applied to the base station described in the example shown in Fig. 10 above, an example of the present disclosure also provides a solution applied to the UE.

Referring to Fig. 11, which is a schematic flowchart of a fourth uplink transmission method provided in an example of the present disclosure, the method is applied to a UE, and comprises the following blocks:

Block S1101: receiving uplink scheduling information sent by a base station.

The uplink scheduling information is determined based on an available SSB symbol, the available SSB symbol is an SSB symbol determined by the base station based on a first schedulable SSB list, the first schedulable SSB list is generated based on a first SSB, the first SSB is: an SSB whose signal quality characterization value has been reported by the UE, the signal quality characterization value characterizes a value obtained by the UE by performing signal quality measurement on a received SSB signal.

Block S1102: performing uplink transmission in the available SSB symbol based on the uplink scheduling information.

It can be seen from the above that in the solution provided by the example of the disclosure, the UE can perform uplink transmission in the available SSB symbol according to the uplink scheduling information after receiving the uplink scheduling information sent by the base station. The SSB symbol is located in a downlink slot. It can be seen that the UE can not only perform normal uplink transmission in the uplink slot, but also perform uplink transmission based on the available SSB symbol in the downlink slot originally for downlink transmission, which improves the uplink transmission rate.

In addition, the available SSB symbol is determined based on the first schedulable SSB list, the first schedulable SSB list is generated based on the signal quality characterization value of the SSB beam corresponding to the SSB received by the UE, which reflects the signal quality of the SSB beam corresponding to the SSB received by the UE. In this way, the SSB symbol for uplink transmission can be selected from the SSB symbols occupied by the SSB based on the signal quality of the SSB beam corresponding to the SSB received by the UE; such that the selected SSB symbol is correlated with the signal quality of the SSB beam corresponding to the SSB received by the UE, which improves the stability of mobile communication.

In order to facilitate understanding, the solution provided by an example of the disclosure will be specifically described below from the perspective of information interaction between the base station and the UE.

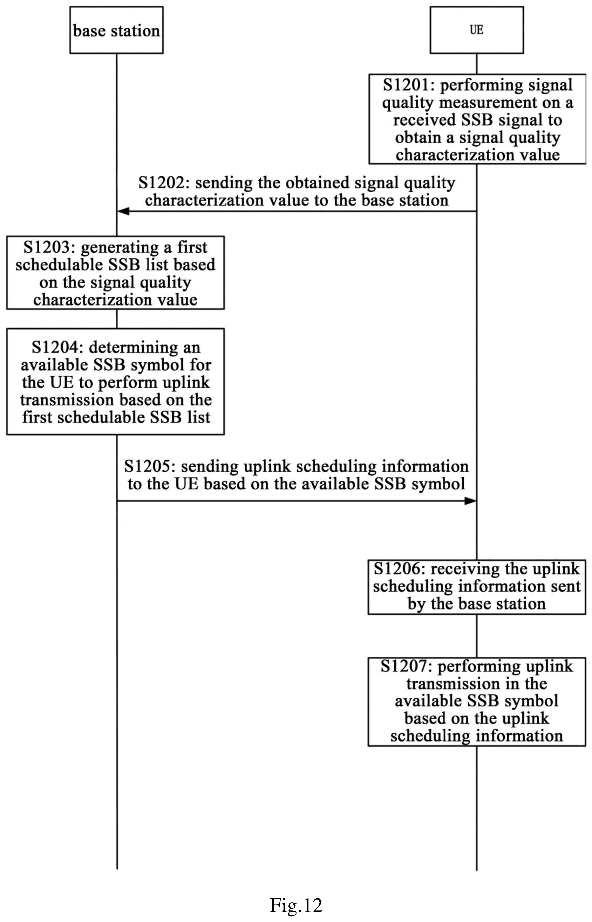

In one case, the base station can generate a first schedulable SSB list based on a signal quality characterization value of an SSB signal reported by the UE, and determine an available SSB symbol for uplink transmission based on the first schedulable SSB list. Based on this, referring to Fig. 12, which is a signaling diagram of a fourth uplink transmission process provided in an example of the disclosure, the above process includes the following blocks.

Block S1201: the UE performs signal quality measurement on a received SSB signal to obtain a signal quality characterization value.

Block S1202: the UE sends the obtained signal quality characterization value to the base station.

In this way, the UE can synchronize the signal quality characterization value of the SSB signal received by itself to the base station, so that the base station can learn the quality strength of each SSB signal according to the received signal quality characterization value, and then can determine, more reasonably, the available SSB symbol for the UE to perform uplink transmission based on the quality strength of each SSB signal.

Block S1203: the base station generates a first schedulable SSB list based on the signal quality characterization

value.

Blocks S1204: the base station determines an available SSB symbol for the UE to perform uplink transmission based on the first schedulable SSB list.

Block S1205: the base station sends uplink scheduling information to the UE based on the available SSB symbol.

Block S1206: the UE receives the uplink scheduling information sent by the base station.

Block S1207: the UE performs uplink transmission in the available SSB symbol based on the uplink scheduling information.

In one example of the disclosure, the base station can determine the available SSB symbol for the UE to perform uplink transmission in the downlink slot from the SSB symbols that have not been used for uplink transmission in the previous SSB period based on the first schedulable SSB list.

Specifically, the base station can select the unselected schedulable SSB with the lowest index from the schedulable SSB list, and determine the SSB symbol occupied by the selected SSB as the SSB symbol of UE for uplink transmission.

In this way, the available SSB symbol determined by the base station for the UE are the SSB symbol that has not been used for uplink transmission in the previous SSB period, preventing a same SSB symbol from being used for uplink transmission in two consecutive SSB periods, thus reducing the probability that the UE cannot normally receive and measure each SSB through the SSB symbol, and improving the stability of mobile communication.

In one example of the disclosure, the base station can also send a second RRC signaling carrying a rate matching parameter to the UE, and the second RRC signaling carries a rate matching parameter to indicate the UE to perform uplink transmission in an available SSB symbol based on a target uplink transmission rate.

The target uplink transmission rate is obtained by performing rate matching on the SSB time-frequency resources of an available SSB symbol.

In this way, through the rate matching operation, when the UE uses an SSB symbol for uplink transmission, the time-frequency resources related to the SSB can be removed from the transmitted time-frequency resources, which improves the speed and reliability of uplink transmission.

Preferably, this example is applicable to scenarios with high requirements for communication reliability.

It can be seen from the above description that the SSB corresponding to the SSB index included in the first schedulable SSB list has a poor signal quality. In this way, selection of an available SSB symbol from the first schedulable SSB is also relied upon the selection of an available SSB symbol corresponding to the SSB with poor signal quality. In this way, the SSB symbol occupied by the SSB with good signal quality off the first schedulable SSB list can still be used to receive the SSB, further ensuring that the UE can receive SSBs normally and thus improving the stability of mobile communication.

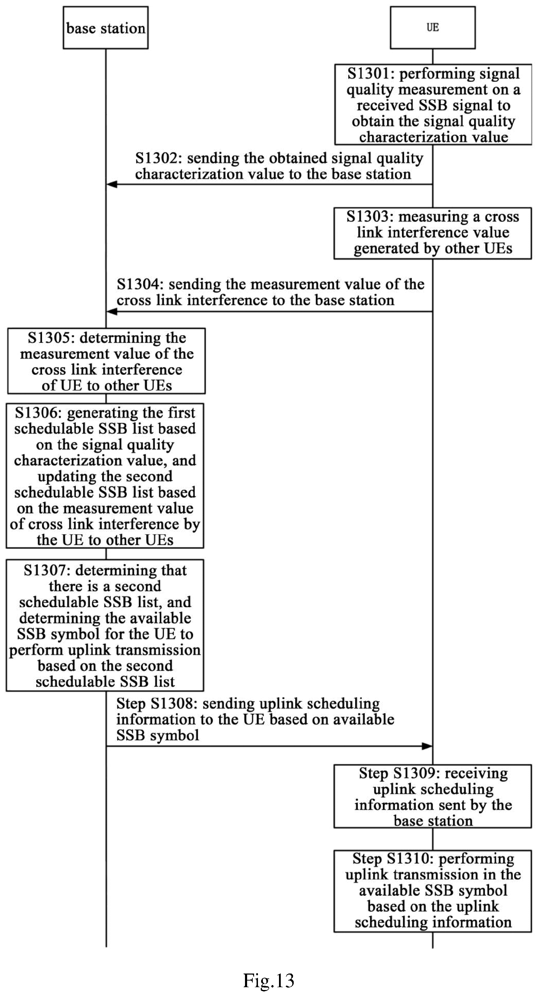

In another case, the base station can generate the first schedulable SSB list based on the signal quality characterization value of the SSB signal reported by the UE, and generate a second schedulable SSB list based on measurement values of the cross link interference reported by the UE. In this way, the base station can determine the available SSB symbol for uplink transmission based on the second schedulable SSB list when it is determined that the second schedulable SSB list exists. Based on this, referring to Fig. 13, which is a signaling diagram of a fifth uplink transmission flow provided by an example of the disclosure, the above process includes the following blocks.

Block S1301: the UE performs signal quality measurement on the received SSB signal to obtain the signal quality characterization value.

Block S1302: the UE sends the obtained signal quality characterization value to the base station.

Block S1303: the UE measures a cross link interference value generated by other UEs.

The measurement value of the cross link interference generated by other UEs is the measurement value of the cross link interference by other UEs to a certain UE.

Specifically, the above measurement value of the cross link interference can be the measurement value obtained and reported by the UE by measuring a CLI (cross link interference) measurement signal sent by other UEs. The other UEs mentioned above can be called interfering UEs.

The above cross link interference measurement signal can be obtained by measuring the SRS (Sounding Reference Signal) sent by the interfering UE. The UE can determine the above measurement value of the cross link interference by measuring the received cross link interference measurement signal.

For example, by measuring and detecting a reference signal, UE1 determines that the measurement value of the cross link interference by UE2 to UE1 is CLI_A, and the measurement value of the cross link interference by UE3 to UE1 is CLI_B; by measuring the SRS, UE2 determines that the measurement value of the cross link interference by UE1 to UE2 is CLI_C; by measuring the SRS, UE3 determines that the measurement value of the cross link interference by UE2 to UE3 is CLI_D.

The above measurement value of the cross link interference can include a reference signal receiving power of a detection reference signal received by the UE, an identification of the interfering UE, an identification of the detection reference signal, a reference signal receiving power corresponding to each detection reference signal, and other

information.

Block S1304: the UE sends the measurement value of the cross link interference to the base station.

It should be noted that the example of the disclosure does not define the execution sequence of blocks S1301- S1302 and S1303- S1304. For example, blocks S1301- S1302 can be executed before or after block S1303- S1304, or can be executed in parallel with block S1303- S1304.

In this way, the UE can synchronize to the base station the measurement value of the cross link interference by other UEs to itself, so that the base station can learn the cross link interference by respective UE to other UEs according to the received measurement value of the cross link interference, and then can determine, more reasonably, the available SSB symbols for uplink transmission of the UE based on the above cross link interference.

Block S1305: the base station determines the measurement value of the cross link interference of UE to other UEs.

It can be seen from the previous block S1304 that each UE can synchronize its measurement value of the cross link interference by other UEs to the base station.

In this block, the base station can summarize the measurement value of the cross link interference received, and determine the measurement values of the cross link interference by each UE to other UEs according to the summarized result.

For example, if the base station receives that the measurement value of the cross link interference by UE2 to UE1 is CLI_A and the measurement value of the cross link interference by UE2 to UE3 is CLI_D, then it can determine that the measurement value of the cross link interference by UE2 to other UEs are CLI_A and CLI_D.

In one case, the base station can determine the measurement values of the cross link interference between UEs synchronized by other base stations, summarize the above measurement values of the cross link interference, and determine the measurement value of the cross link interference by respective UE to be scheduled to other UEs according to the summarized result.

Block S1306: the base station generates the first schedulable SSB list based on the signal quality characterization value, and updates the second schedulable SSB list based on the measurement value of cross link interference by the UE to other UEs.

It can be seen that the second schedulable list is updated based on the measurement value of cross link interference by the UE to other UEs.

The method of updating the second schedulable SSB list based on the measurement value of cross link interference by the UE to other UEs is described below.

In one case, a sum of the measurement values of cross link interference by the UE to other UEs can be calculated. If the sum is less than or equal to a first threshold value, the information of an schedulable SSB of the UEs recorded in the first schedulable SSB list can be copied to the second schedulable SSB list; if the sum is greater than the first threshold value, the information of an schedulable SSB of the UE is removed from the second schedulable SSB list in the case where the information of an schedulable SSB of the UE has been recorded in the second schedulable SSB list.

For example, if the base station determines that the cross link interference value by UE2 to other UEs is CLI_A and CLI_D, then the sum of measurement values of the cross link interference by UE2 to other UEs is: CLI_A+CLI_D. If CLI_A+CLI_D is less than or equal to the first threshold, the information of an schedulable SSB of the UE2 recorded in the first schedulable SSB list will be copied to the second schedulable SSB list.

It should be noted that when the base station creates the second schedulable SSB list for the first time, it can first create an empty list. The base station calculates the sum of the measurement values of the cross link interference by the UE to other UEs, determines the UE with corresponding sum in the first schedulable SSB list less than or equal to the first threshold value, and copy the information of the schedulable SSBs of the determined UE to the empty list to obtain the second schedulable SSB list.

In addition, the base station can update the second schedulable SSB list according to the continuously determined measurement values of the cross link interference.

It can be seen that when the second schedulable SSB list is updated in the above manner, the information of the schedulable SSBs of the first UE will be retained, and the information of the schedulable SSBs of the second UE will be deleted. The first UE is the UE with smaller sum of the measurement values of the cross link interference to other UEs, and the second UE is the UE with larger sum of the measurement values of the cross link interference to other UEs.

For example, if the SSB indexes recorded in the second schedulable SSB list of UE1 include [SSB5, SSB2, SSB4], and the SSB indexes recorded in the second schedulable SSB list UE2 include [SSB6, SSB7, SSB9], wherein the sum of the measurement values of the cross link interference corresponding to UE1 is greater than or equal to the first threshold, the SSB indexes recorded in the second schedulable SSB list of UE1 can be deleted.

In this way, the information retained in the updated second schedulable list is: the information of the schedulable SSBs of the UE with a small sum of the measurement values of the cross link interference to other UEs. That is, the information retained in the second schedulable list is the information of the schedulable SSBs of the UE with weak cross link interference to other UEs In this way, the SSB indexes of the schedulable SSBs of the UE with weaker cross link

interference can be selected from the second schedulable SSB list for this UE. The SSB symbols included in the SSBs corresponding to the above SSB indexes are the SSB symbols available for uplink transmission. It can be seen that this will allow the UE to have weak cross link interference to other UEs when it performs uplink transmission based on the determined SSB symbols, and thus improve the stability when the UE performs uplink transmission based on the determined SSB symbols.

Block S1307: the base station determines that there is a second schedulable SSB list, and determines the available SSB symbol for the UE to perform uplink transmission based on the second schedulable SSB list.

Specifically, when the base station determines that there is a second schedulable SSB list, it can select a fifth SSB with a lowest list index from the information of schedulable SSBs of the UE recorded in the second schedulable SSB list, and determine the SSB symbol of the UE for performing uplink transmission based on the selected fifth SSB.

Since the second schedulable SSB list can be obtained by copying the information of an schedulable SSB of the UE recorded in the first schedulable SSB list, when the SSB indexes in the first schedulable SSB list are sorted in an ascending order of the corresponding signal quality characterization values from smallest to largest, the SSB indexes in the second schedulable SSB list are also sorted in an ascending order of the corresponding signal quality characterization values from smallest to largest; When the SSB indexes in the first schedulable SSB list are sorted in an ascending order of indexes from smallest to largest, the SSB indexes in the second schedulable SSB list are also sorted in an ascending order of indexes from smallest to largest.

Thus, the SSB with a smallest list index in the second schedulable SSB list can be the SSB with the weakest signal quality characterization value or the SSB with the smallest corresponding SSB index.

In this way, the base station selects the SSB with the smallest index from the information of the schedulable SSBs of the UE recorded in the second schedulable SSB list. That is, for the UE with the smaller cross link interference value, it selects the SSB with the weakest signal quality characterization value or the SSB with the smallest index from the second schedulable SSB list, and uses the SSB symbol of the selected SSB as the available SSB symbol for the UE to perform uplink transmission. It not only ensures that the UE can normally receive SSBs based on other SSB symbols with strong signal quality characterization values, but also enables the UE to have weak cross link interference to other UEs when it performs uplink transmission based on the determined SSB symbol, which improves the stability when the UE performs uplink transmission based on the determined SSB symbol. In other words, it can improve the uplink transmission rate while ensuring the stability of mobile communication.

Block S1308: the base station sends uplink scheduling information to the UE based on available SSB symbol.

Block S1309: the UE receives uplink scheduling information sent by the base station.

Block S1310: the UE performs uplink transmission in the available SSB symbol based on the uplink scheduling information.

It can be seen that the second schedulable SSB list is also maintained based on the measurement values of the cross link interference between the UE and other UEs, so that when the SSB symbol for UE to perform upload transmission is determined based on the first schedulable SSB list or the second schedulable SSB list, the cross link interference between the UE and other UEs is also considered, which makes the determination of the SSB symbol more reasonable. Thus, the stability when the UE performs uplink transmission based on the determined SSB symbol is improved.

The specific way for the base station to determine the available SSB symbol for UE to perform uplink transmission is described by way of an example.

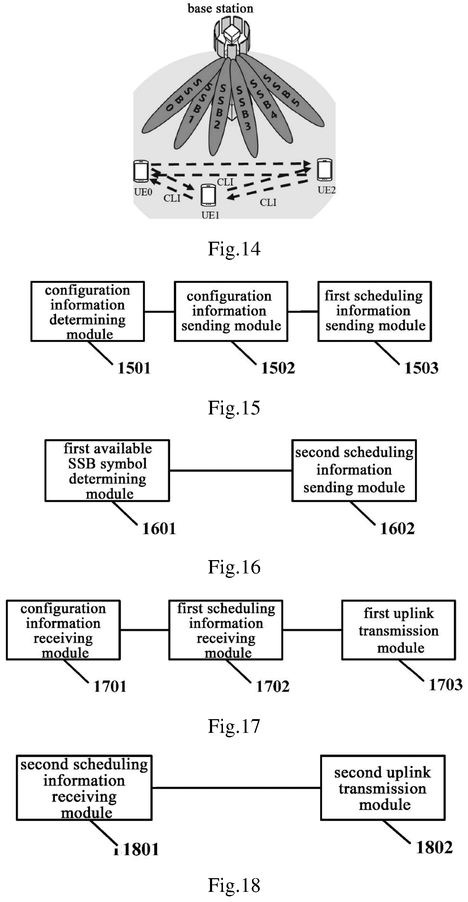

Referring to Fig. 14, Fig. 14 is a schematic diagram of a method for determining an SSB beam and an available SSB symbol provided in an example of the present disclosure.

Fig. 14 shows the relationship between the coverage of the SSB beams corresponding to UE0-UE2 and SSB0-SSB5, and also shows the schematic CLI between UEs.

It can be seen that for UE1, the SSB beams of SSB1, 2, and 3 can cover UE1 better, that is, the signal quality of the SSB beams corresponding to SSB1, 2, and 3 is better, such that the RSRP corresponding to SSB1, 2, and 3 is relatively large; On the contrary, the SSB beams of SSBO, 4, and 5 fail to cover UE1 well, that is, the signal quality of the SSB beams corresponding to SSBO, 4, and 5 is poor, such that the RSRP corresponding to SSB1, 2, and 3 is relatively small.

Then, the base station can generate the first schedulable SSB list for UE1 based on the SSB indexes of SSBO, 4, and 5 with relatively small corresponding RSRP.

Then, the base station can determine the sum of the CLI values of UE1 to UE0 and UE2 as the overall CLI value. If the above overall CLI value is less than or equal to the preset first threshold, the SSB indexes recorded in the first schedulable SSB list will be copied to the second schedulable SSB list.

Finally, the base station can select one SSB index with the smallest corresponding RSRP from the SSB indexes of SSBO, 4, and 5 included in the second schedulable SSB list, determine the SSB symbol corresponding to the determined SSB index as an available SSB symbol, and schedule PUSCH data in the uplink subband of the available SSB symbol, so that the UE can transmit PUSCH data in the uplink subband of the available SSB symbol.

Corresponding to the above uplink transmission method applied to a base station, an example of the present disclosure also provides an uplink transmission apparatus, which is applied to a base station.

Referring to Fig. 15, which is a structural diagram of a first uplink transmission apparatus provided in an example of the present disclosure, the apparatus is applied to a base station and includes the following modules:

a configuration information determining module 1501, to determine the configuration information with respect to uplink transmission, wherein the configuration information is to indicate an available SSB symbol for a UE to perform uplink transmission, and the available SSB symbol is configured with an uplink subband therein;

a configuration information sending module 1502, to send the configuration information to the UE;

a first scheduling information sending module 1503, to send uplink scheduling information to the UE so that the UE can perform uplink transmission in the available SSB symbol based on the uplink scheduling information.

It can be seen from the above that in the solution provided by the example of the present disclosure, the base station can determine the configuration information with respect to uplink transmission, which configuration information is to indicate the available SSB symbol for the UE to perform uplink transmission, after the base station sends the configuration information to the UE, the UE can learn which available SSB symbol can be used for performing uplink transmission; in turn, after the base station sends the uplink scheduling information to the UE, the UE can perform uplink transmission based on the available SSB symbol. The SSB symbol is located in a downlink slot. It can be seen that the UE can not only perform normal uplink transmission in an uplink slot, but also perform uplink transmission based on the available SSB symbol in a downlink slot originally used for downlink transmission, which improves the uplink transmission rate.

In the solution provided in the example of the present disclosure, the available SSB symbol indicated by the configuration information is the part of the SSB symbols, among all SSB symbols, that are configured with an uplink subband therein and used for uplink transmission. In this way, while the UE performs uplink transmission based on scheduling in the available SSB symbol, it can also receive SSBs normally in the SSB symbols other than the available SSB symbol. Such, the UE can perform cell synchronization, update system information, and other operations based on the received SSB symbols, thus reducing the probability of abnormal communication caused by failure to receive the SSBs. It can be seen that the solution provided by the example of the present disclosure improves the uplink transmission rate while ensuring that the UE can receive SSBs normally. In other words, it can improve the uplink transmission rate while ensuring the stability of mobile communication.

In one example of the disclosure, the configuration information includes: an indication value of an available SSB, which is used to indicate whether SSB symbols included in the available SSB are all available SSB symbols.

In this way, the configuration information determined by the base station includes an indication value of an available SSB, which can clearly indicate the SSB symbol for uplink transmission.

In one example of the present disclosure, the configuration information determining module 1501 is specifically to determine candidate SSBs, wherein SSB symbols included in the candidate SSBs are all configured with an uplink subband; select an available SSB from the candidate SSBs; and generate configuration information containing the indication values of the available SSBs.

It can be seen that the base station can first determine the candidate SSBs in which the SSB symbols included therein are all configured with uplink subbands, which are the SSB symbols that can theoretically be used for uplink transmission. Then, the base station can select the available SSB from the candidate SSBs. The SSB symbols included in the available SSB are the SSB symbols that can be used for uplink transmission. Thus, the available SSB symbol can be accurately determined.

In one example of the present disclosure, the configuration information sending module 1502 is specifically to send a first RRC signaling to the UE, wherein the first RRC signaling carries an SSB location configuration parameter. The value of a first location in the SSB location configuration parameter is set to a first preset value, and the first location is the location corresponding to the available SSB in the SSB location configuration parameter.

In this way, the base station can indicate the available SSB by setting the SSB location configuration parameter of the first RRC signaling, and then send the first RRC signaling to the UE to enable the UE to learn the available SSB, thereby enabling the UE to learn the available SSB symbol included in the available SSB, without the need for other additional configuration, thus improving the efficiency of information exchange between the base station and the UE.

In one example of the present disclosure, the configuration information includes: window information of an uplink subband protection window, wherein in the SSB symbol located in the uplink subband protection window and configured with an uplink subband, the priority of the uplink transmission is higher than that of the downlink transmission.

It can be seen from the above that the priority of the uplink transmission is higher than that of the downlink transmission in the SSB symbol configured with uplink subband and located in the uplink subband protection window. That is, for the UE, the UE will perform uplink transmission according to scheduling in the SSB symbol configured with uplink subband and located in the uplink subband protection window, rather than downlink transmission. It can be seen that the

UE can not only perform normal uplink transmission in the uplink slot, but also perform uplink transmission in the downlink slot originally for downlink transmission, which improves the uplink transmission rate.

In addition, the UE can also perform normal downlink transmission in SSB symbols outside the uplink subband protection window in the downlink slot. In other words, while performing uplink transmission according to scheduling in the SSB symbols located in the uplink subband protection window, the UE can also receive the SSBs in the SSB symbols located outside the uplink subband protection window, which ensures the synchronization between the UE and the base station. The UE also receive the MIB, thus reducing the probability of abnormal communication due to the failure to receive the SSBs. It can be seen that this improves the uplink transmission rate while ensuring a normal reception of SSBs, that is, it can improve the uplink transmission rate while ensuring the stability of mobile communication.

In one example of the present disclosure, the window information includes window identification, window type and window location information.

It can be seen that the window identification, window type and window location information describe the characteristics of the uplink subband protection window in many aspects, and based on the above information, the uplink subband protection window can be more accurately determined.

In one example of the present disclosure, the window location information includes the period offset value representing a window period and an offset, a starting symbol of the window in a starting slot, and a window length.

It can be seen from the above that the above periodic offset value, the starting symbol and in the starting slot the window length of the window can comprehensively and accurately describe the location of the periodic protection window, such that after the base station synchronizes the window location information including the above periodic offset value, the starting symbol and the window length to the UE, the UE can accurately determine the location of the protection window based on the received window location information.

In one example of the present disclosure, the starting SFN and the starting slot of the uplink subband protection window are calculated according to the following formula:

$$\text{numberOfSlotsPerFrame} \times \text{SFN1} + \text{slot number in the frame} = [(\text{numberOfSlotsPerFrame} \times \text{SFN}_{\textbf{start}} + \textbf{offset}) + \text{N} \times \textbf{periodicity}]\text{modulo}\ (1024 \times \text{numberOfSlotsPerFrame})$$

wherein numberOfSlotsPerFrame represents a total number of slots per frame, SFN1 represents the starting SFN, slot number in the frame represents the starting slot, $SFN_{start}$ represents a system frame number that takes effect after the uplink subband protection window configuration or reconfiguration; periodicity represents the window period included in the period offset value, offset represents the window offset included in the period offset value, N represents a serial number of the protection period.

In one example of the present disclosure, the configuration information further includes: activation indication information, wherein the activation indication information is to indicate whether the uplink subband protection window is activated.

In this way, whether the uplink subband protection window is activated can be flexibly configured by setting the activation indication information, which improves the flexibility when indicating the available SSB symbol based on uplink subband protection window.

In one example of the disclosure, the activation indication information is: a first MAC control element;
The first MAC control element includes: a MAC subheader, an identification of a serving cell on which the MAC control element acts, an identification of a bandwidth part on which the MAC control element acts, and a characterization value of whether each uplink subband protection window is activated.

It can be seen that the information included in the first MAC control element can clearly indicate the activation of the uplink subband protection window.

In one example of the disclosure, the activation indication information is: a first DCI parameter;
The first DCI parameter includes a characterization value of whether each uplink subband protection window is activated.

In this way, the base station can flexibly indicate whether the uplink subband protection window is activated by setting the first DCI parameter. In addition, the DCI parameter indicates whether the uplink subband protection window is activated by means of the characterization value, which requires less bytes, such that the data volume of the DCI parameter is smaller, thus reducing the data volume of the information that the base station needs to send to the UE.

Referring to Fig. 16, which is a structural diagram of a second uplink transmission apparatus provided in an example of the disclosure, the apparatus is applied to a base station and includes the following modules:

a first available SSB symbol determining module 1601 to determine an available SSB symbol for a UE to perform uplink transmission based on the first schedulable SSB list;

a second scheduling information sending module 1602 to send uplink scheduling information to the UE based on the available SSB symbol, so that the UE can perform uplink transmission in the available SSB symbol based on the uplink scheduling information.

It can be seen from the above that in the solution provided by the examples of the present disclosure, the base station can determine the available SSB symbol for the UE to perform uplink transmission based on the first schedulable SSB list, and can send the uplink scheduling information to the UE based on the available SSB symbol; Thus, for UE, it can perform uplink transmission in available SSB symbol based on the uplink scheduling information. The SSB symbol is located in the downlink slot. It can be seen that the UE can not only perform normal uplink transmission in the uplink slot, but also perform uplink transmission based on available SSB symbol in the downlink slot originally for downlink transmission, which improves the uplink transmission rate.

In addition, the first schedulable SSB list is generated based on the signal quality characterization value of the SSB beam corresponding to the SSB received by the UE, which reflects the signal quality of the SSB beam corresponding to the SSB received by the UE. In this way, the SSB symbol for uplink transmission can be selected from the SSB symbols occupied by the SSB based on the signal quality of the SSB beam corresponding to the SSB received by the UE; the selected SSB symbol is related with the signal quality of the SSB beam corresponding to the SSB received by the UE, which improves the stability of mobile communication.

In one example of the present disclosure, the first schedulable SSB list is generated based on the first SSB. The first SSB is: an SSB whose signal quality characterization value has been reported by the UE, and the signal quality characterization value characterizes a value obtained by the UE performing signal quality measurement on a received SSB signal.

In this way, the signal quality characterization value of the SSB signal received by the UE is taken into account when generating the first schedulable SSB list, such that the signal quality characterization value of the SSB signal received by the UE is taken into account when determining the available SSB symbol based on the first schedulable SSB list, thus making the determination of an SSB symbol more reasonable.

In one example of the disclosure, the first SSB includes: the SSB corresponding to a first quality characterization value, wherein the first quality characterization value is the foremost first number of characterization values in the signal quality characterization values reported by the UE, sorted from the largest to the smallest;

The first schedulable SSB list is generated in the following manner:

determining, based on the first SSB, a second SSB whose signal quality characterization value is not reported by the UE; generating the first schedulable SSB list, wherein the first schedulable SSB list contains the SSB index of the second SSB, sorted from the largest to the smallest.

It can be seen from the previous description that the second SSB is the SSB with a lower signal quality characterization value. Thus, the base station generates the first schedulable SSB list containing the SSB index of the second SSB, so that when the second SSB is selected from the first schedulable SSB list later, the selected second SSB is the SSB with a lower signal quality characterization value, and in turn the SSB symbol occupied by the second SSB is used as the SSB symbol for performing uplink transmission. In this way, the SSB symbols occupied by the SSBs with higher signal quality characterization value off the first schedulable SSB list can still be used to receive the SSBs. It can be seen that this improves the uplink transmission rate while ensuring a normal reception of the SSBs, that is, it can improve the uplink transmission rate while ensuring the stability of mobile communication.

In one example of the present disclosure, the first SSB includes: SSBs corresponding to all signal quality characterization values measured by the UE;

The first schedulable SSB list is generated in the following manner:

The base station determines a third SSB corresponding to the second signal quality characterization value, wherein, the second signal quality characterization value is the second number of characterization values among the signal quality characterization values reported by the UE; and generate the first schedulable SSB list containing an SSB index of the third SSB, wherein, the SSB indexes included in the first schedulable SSB list are sorted from smallest to largest according to the corresponding signal quality characterization value of the SSB.

The base station generates the first schedulable SSB list containing an SSB index of the third SSB, so that the third SSB with a lower signal quality characterization value is selected from the first schedulable SSB list later, and the SSB symbol occupied by the third SSB is used as the SSB symbol for uplink transmission. In this way, the SSB symbols occupied by the SSBs with higher signal quality characterization values off the first schedulable SSB list can still be used to receive the SSBs. It can be seen that this improves the uplink transmission rate while ensuring a normal reception of the SSBs, that is, it can improve the uplink transmission rate while ensuring the stability of mobile communication.

In one example of the present disclosure, the first available SSB symbol determining module 1601 is specifically to select a fourth SSB with a smallest list index from the first schedulable SSB list; based on the fourth SSB, determine the available SSB symbol for the UE to perform uplink transmission.

In this way, SSB can be selected from the first schedulable SSB list starting from the smallest SSB index.

Alternatively, it means that a corresponding SSB with the weakest signal is selected from the first schedulable SSB list, and the SSB symbol occupied by the selected SSB is determined as the available SSB symbol. The SSB symbols occupied by other corresponding SSBs with larger signal quality characterization values are still used to receive the SSBs, which improves the uplink transmission rate while ensuring the normal reception of the SSBs, that is, it can improve the uplink transmission rate while ensuring the stability of mobile communication.

In one example of the disclosure, the apparatus further comprises:

a second available SSB symbol determining module, to determine an available SSB symbol for UE to perform uplink transmission based on a second schedulable SSB list if there is a second schedulable SSB list, wherein the second schedulable list is updated based on measurement values of the cross link interference of the UE to other UEs; Otherwise, triggering the first available SSB symbol determining module 1601.

It can be seen that the second schedulable SSB list is also maintained based on the measurement values of the cross link interference between the UE and other UEs, so that when the SSB symbol for the UE to perform upload transmission is determined based on the first schedulable SSB list or the second schedulable SSB list, the cross link interference between the UE and other UEs is also considered, which makes the determination of the SSB symbol more reasonable. Thus, the stability when the UE performs uplink transmission based on the determined SSB symbol is improved.

If the second schedulable SSB list records the information of a schedulable SSB of the UE, the SSB with the smallest index is selected from the information of the schedulable SSBs of the UE recorded in the second schedulable SSB list. That is, for the UE with the smaller cross link interference value, the SSB with the weakest signal quality characterization value or the SSB with the smallest index is selected from the second schedulable SSB list, and the SSB symbol of the selected SSB is used as the available SSB symbol for the UE to perform uplink transmission. It not only ensures that the UE can normally receive SSBs based on other SSB symbols with strong signal quality characterization values, but also enables the UE to have weak cross link interference to other UEs when it performs uplink transmission based on the determined SSB symbol, which improves the stability when the UE performs uplink transmission based on the determined SSB symbol. In other words, it can improve the uplink transmission rate while ensuring the stability of mobile communication.

In one example of the disclosure, the second schedulable SSB list is updated as follows:

calculating a sum of the measurement values of cross link interference by the UE to other UEs, if the sum is less than or equal to a first threshold value, the information of an schedulable SSB of the UE recorded in the first schedulable SSB list can be copied to the second schedulable SSB list; if the sum is greater than the first threshold value, the information of an schedulable SSB of the UE is removed from the second schedulable SSB list in the case where the information of an schedulable SSB of the UE has been recorded in the second schedulable SSB list.

In this way, the information retained in the updated second schedulable list is: the information of the schedulable SSBs of the UE with a small sum of measurement values of the cross link interference of other UEs. That is, the information retained in the second schedulable list is the information of the schedulable SSBs of the UE with weak cross link interference to other UEs. In this way, it is convenient to select the SSB indexes of the schedulable SSBs of the UE with weaker cross link interference to other UEs from the second schedulable SSB list. The SSB symbols included in the SSB corresponding to the above SSB indexes are the SSB symbols available for uplink transmission. It can be seen that this will allow the UE to have weak cross link interference to other UEs when it performs uplink transmission based on the determined SSB symbols, and thus improve the stability when the UE performs uplink transmission based on the determined SSB symbols.

In one example of the present disclosure, the second available SSB symbol determining module is specifically to select a fifth SSB with a lowest list index from the second schedulable SSB list; based on the fifth SSB, determine the available SSB symbol for the UE to perform uplink transmission.

In one example of the present disclosure, the first available SSB symbol determining module 1601 is specifically to determine the available SSB symbol for the UE to perform uplink transmission from the SSB symbols that have not been used for uplink transmission in a previous SSB period based on the first schedulable SSB list.

In this way, the available SSB symbol determined by the base station for the UE are the SSB symbol that has not been used for uplink transmission in the previous SSB period, preventing a same SSB symbol from being used for uplink transmission in two consecutive SSB periods, thus reducing the probability that the UE cannot normally receive and measure each SSB through the SSB symbol, and improving the stability of mobile communication.

In one example of the present disclosure, the apparatus further comprises:

a RRC signaling sending module, to send a second RRC signaling carrying a rate matching parameter to the UE to indicate the UE to perform uplink transmission in the available SSB symbol based on a target uplink transmission rate, wherein the target uplink transmission rate is obtained by performing rate matching on the SSB time-frequency resources of the available SSB symbol.

In this way, through the rate matching operation, when the UE uses SSB symbols for uplink transmission, the time-frequency resources related to SSB can be removed from the transmitted time-frequency resources, which improves

the speed and reliability of uplink transmission.

Corresponding to the above uplink transmission method applied to the UE, an example of the present disclosure also provides an uplink transmission apparatus applied to a UE.

Referring to Fig. 17, which is a structural diagram of a third uplink transmission apparatus provided in an example of the disclosure, the apparatus is applied to a UE and includes the following modules:

a configuration information receiving module 1701, to receive configuration information with respect to uplink transmission sent by a base station, wherein the configuration information is to indicate an available SSB symbol of the UE for perform uplink transmission, and the available SSB symbol is configured with an uplink subband therein;

a first scheduling information receiving module 1702, to receive uplink scheduling information sent by the base station;

a first uplink transmission module 1703, to perform uplink transmission in the available SSB symbol based on the uplink scheduling information.

It can be seen from the above that in the solution provided by the example of the present disclosure, the UE can receive the configuration information with respect to uplink transmission sent by the base station, which configuration information is to indicate the available SSB symbol for the UE to perform uplink transmission, such that the UE can learn which available SSB symbol can be used for performing uplink transmission; in turn, after the base station sends the uplink scheduling information to the UE, the UE can perform uplink transmission based on the available SSB symbol. The SSB symbol is located in the downlink slot. It can be seen that the UE can not only perform normal uplink transmission in an uplink slot, but also perform uplink transmission based on the available SSB symbol in a downlink slot originally used for downlink transmission, which improves the uplink transmission rate

Furthermore, the available SSB symbol indicated by the above configuration information is the part of the SSB symbols, among all SSB symbols, that are configured with an uplink subband therein and used for uplink transmission. In this way, while the UE performs uplink transmission based on scheduling in the available SSB symbol, it can also receive the SSBs normally in the SSB symbols other than the available SSB symbol, Such, the UE can perform cell synchronization, update system information, and other operations based on the received SSB symbols, thus reducing the probability of abnormal communication caused by failure to receive the SSBs. It can be seen that the solution provided by the example of the present disclosure improves the uplink transmission rate while ensuring that the UE can receive the SSB normally. In other words, it can improve the uplink transmission rate while ensuring the stability of mobile communication.

In one example of the disclosure, the configuration information includes: an indication value of an available SSB, which are used to indicate whether SSB symbols included in the available SSBs are all available SSB symbols.

In this way, UE can conveniently determine the available SSB symbol for uplink transmission based on the indication value of the available SSB included in the configuration information sent by the base station.

In one example of the disclosure, the configuration information receiving module 1701 is specifically to receive a first RRC signaling sent by the base station;
the available SSB symbol is an SSB symbol included in the SSB corresponding to a second location in the first RRC signaling, and the second location is a location where the value of the SSB location configuration parameter is a first preset value.

It can be seen that UE can conveniently determine the available SSB symbol based on the SSB location configuration parameter of the first RRC signaling.

In one example of the present disclosure, the configuration information includes: window information of an uplink subband protection window, wherein in the SSB symbol located in the uplink subband protection window and configured with an uplink subband, the priority of the uplink transmission is higher than that of the downlink transmission;
the available SSB symbol is located in the uplink subband protection window indicated by the window information and is configured with an uplink subband.

In this example, the configuration information received by the UE includes the window information of an uplink subband protection window, such that the SSB symbol located in the uplink subband protection window and configured with the uplink subband can be accurately determined based on the window information. Further, after receiving the uplink scheduling information sent by the base station, the UE can accurately determine the SSB symbol located in the uplink subband protection window indicated by the window information and configured with the uplink subband, and performs uplink transmission based on the determined SSB symbol..

In one example of the present disclosure, the configuration information further includes: activation indication information, wherein the activation indication information is to indicate whether the uplink subband protection window is activated;

The available SSB symbol is located in a first window and is configured with an uplink subband. The first window is an activated window indicated by the activation indication information, and the first window belongs to the uplink subband

protection window indicated by the window information.

In this way, the UE only determines the available SSB symbol in the first window which is indicated as activated by the activation indication information. With the change of the activation indication information sent by the base station, the available SSB symbol determined by the UE can also be changed accordingly, thus improving the flexibility in determining the SSB symbols.

Referring to Fig. 18, which is a structural diagram of a fourth uplink transmission apparatus provided in an example of the disclosure, the apparatus is applied to a UE and includes the following modules:

a second scheduling information receiving module 1801, to receive uplink scheduling information sent by a base station, wherein the uplink scheduling information is determined based on an available SSB symbol, the available SSB symbol is the SSB symbol determined by a base station based on a first schedulable SSB list, the first schedulable SSB list is generated based on a first SSB, the first SSB is: an SSB whose signal quality characterization value has been reported by the UE, the signal quality characterization value characterizes a value obtained by the UE performing signal quality measurement on a received SSB signal;

a second uplink transmission module 1802, to perform uplink transmission in the available SSB symbol based on the uplink scheduling information.

It can be seen from the above that in the solution provided by the example of the disclosure, the UE can perform uplink transmission in the available SSB symbol according to the uplink scheduling information after receiving the uplink scheduling information sent by the base station. The SSB symbol is located in a downlink slot. It can be seen that the UE can not only perform normal uplink transmission in the uplink slot, but also perform uplink transmission based on the available SSB symbol in the downlink slot originally for downlink transmission, which improves the uplink transmission rate.

In addition, the available SSB symbol is determined based on a first schedulable SSB list, the first schedulable SSB list is generated based on a signal quality characterization value of an SSB beam corresponding to the SSB received by the UE, which reflects the signal quality of the SSB beam corresponding to the SSB received by the UE. In this way, the SSB symbol for uplink transmission can be selected from the SSB symbols occupied by the SSB based on the signal quality of the SSB beam corresponding to the SSB received by the UE; such that the selected SSB symbol is correlated with the signal quality of the SSB beam corresponding to the SSB received by the UE, which improves the stability of mobile communication.

In one example of the disclosure, the apparatus further comprises:

a signal quality measuring module, to perform signal quality measurement on the received SSB signal to obtain the signal quality characterization value.

a signal quality characterization value transmission module, to transmit the obtained signal quality characterization value to the base station, so that the signal quality characterization value obtained by the base station generates the first schedulable SSB list.

In this way, the UE can synchronize the signal quality characterization value of the SSB signal received by itself to the base station, so that the base station can learn the quality strength of each SSB signal according to the received signal quality characterization value, and then can determine, more reasonably, the available SSB symbols for the UE to perform uplink transmission based on the quality strength of each SSB signal.

In one example of the disclosure, the apparatus further comprises:

an interference measuring module, to measure a measurement value of cross link interference generated by other UEs;

an interference measurement value sending module, to send the measurement value of the cross link interference to the base station, so that the base station updates a second schedulable SSB list based on the measurement value of the cross link interference .

In this way, the UE can synchronize the measurement value of the cross link interference of other UEs to the base station, so that the base station can calculate the cross link interference of each UE to other UEs according to all measurement values of the cross link interference reported by the UE, and then can determine, more reasonably, the available SSB symbols for the UE to perform uplink transmission based on the above cross link interference.

Corresponding to the above uplink transmission method applied to the base station and the UE, an example of

the present disclosure also provides a base station and UE.

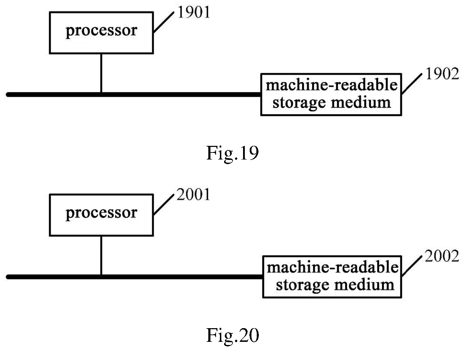

An example of the present disclosure provides a base station, as shown in Fig. 19, which includes a processor 1901 and a machine-readable storage medium 1902. The machine-readable storage medium 1902 has machine executable instructions that can be executed by the processor 1901, and the machine executable instructions cause the processor 1901 to perform the following blocks:

determining configuration information with respect to uplink transmission, wherein the configuration information is to indicate an available SSB symbol for a UE to perform uplink transmission, and the available SSB symbol is configured with an uplink subband;

sending the configuration information to the UE;

sending uplink scheduling information to the UE so that the UE can perform uplink transmission in the available SSB symbol based on the uplink scheduling information.

In one example of the disclosure, the configuration information includes: an indication value of an available SSB, which is used to indicate whether SSB symbols included in the available SSB are all available SSB symbols.

In one example of the disclosure, the machine executable instructions also cause the processor to perform the following blocks:

determining candidate SSBs, wherein SSB symbols included in the candidate SSBs are all configured with an uplink subband.

selecting an available SSB from the candidate SSBs;

Generating configuration information containing an indication value of the available SSB.

In one example of the disclosure, the machine executable instructions also cause the processor to perform the following blocks:
sending a first RRC signaling to the UE, wherein the first RRC signaling carries an SSB location configuration parameter, a value of a first location in the SSB location configuration parameter is set to a first preset value, and the first location is a location corresponding to the available SSB in the SSB location configuration parameter.

In one example of the present disclosure, the configuration information includes: window information of an uplink subband protection window, wherein in the SSB symbol located in the uplink subband protection window and configured with an uplink subband, the priority of the uplink transmission is higher than that of the downlink transmission.

In one example of the present disclosure, the window information includes window identification, window type and window location information.

In one example of the present disclosure, the window location information includes: a period offset value representing a window period and an offset, a starting symbol of the window in a starting slot, and a window length.

In one example of the present disclosure, the starting SFN and the starting slot of the uplink subband protection window are calculated according to the following formula:

$$\begin{aligned}&\text{numberOfSlotsPerFrame} \times \text{SFN1} + \text{slot number in the frame}\\&\quad = [(\text{numberOfSlotsPerFrame} \times \text{SFN}_{\text{start}} + \text{offset}) + \text{N} \times \text{periodicity}]\,\text{modulo}\,(1024\\&\quad \times \text{numberOfSlotsPerFrame})\end{aligned}$$

Where numberOfSlotsPerFrame represents a total number of slots per frame, SFN1 represents the starting SFN, slot number in the frame represents the starting slot, $\text{SFN}_{\text{start}}$ represents a system frame number that takes effect after the uplink subband protection window configuration or reconfiguration, periodicity represents the window period included in the period offset value, offset represents the window offset included in the period offset value, and N represents a serial number of the window period.

In one example of the present disclosure, the configuration information further includes: activation indication information, wherein the activation indication information is to indicate whether the uplink subband protection window is activated.

In one example of the disclosure, the activation indication information is: a first MAC control element;
The first MAC control element includes: an MAC subheader, an identification of a serving cell on which the MAC control element acts, an identification of a bandwidth part on which the MAC control element acts, and a characterization value of whether each uplink subband protection window is activated.

In one example of the disclosure, the activation indication information is: a first DCI parameter;

The first DCI parameter includes a characterization value of whether each uplink subband protection window is activated.

An example of the disclosure provides another base station, which includes a processor and a machine-readable storage medium. The machine-readable storage medium has machine executable instructions that can be executed by the processor, and the machine executable instructions cause the processor to perform the following blocks:

determining an available SSB symbol for a UE to perform uplink transmission based on a first schedulable SSB list;

based on the available SSB symbol, sending uplink scheduling information to the UE so that the UE can perform uplink transmission in the available SSB symbol based on the uplink scheduling information.

In one example of the present disclosure, the first schedulable SSB list is generated based on a first SSB. The first SSB is: an SSB whose signal quality characterization value has been reported by the UE, and the signal quality characterization value characterizes a value obtained by the UE performing signal quality measurement on a received SSB signal.

In one example of the disclosure, the first SSB includes: an SSB corresponding to a first quality characterization value, wherein the first quality characterization value is the foremost first number of characterization values in the signal quality characterization values reported by the UE, sorted from largest to smallest.

The first schedulable SSB list is generated in the following manner:
determining a second SSB whose signal quality characterization value is not reported by the UE based on the first SSB; generating the first schedulable SSB list, wherein the first schedulable list contains an SSB index of the second SSB, and the SSB indexes are sorted from smallest to largest.

In one example of the disclosure, the first SSB includes: the SSBs corresponding to all the signal quality characterization values measured by the UE;

The first schedulable SSB list is generated in the following manner:
determining a third SSB corresponding to the second signal quality characterization value, wherein the second signal quality characterization value is the foremost second number of characterization values among the signal quality characterization values reported by the UE and sorted from smallest to largest; generating the first schedulable SSB list, wherein the first schedulable SSB list contains an SSB index of the third SSB, and the SSB indexes are sorted from smallest to largest according to the corresponding signal quality characterization value of the SSB.

In one example of the disclosure, the machine executable instructions also cause the processor to perform the following blocks:
selecting a fourth SSB with a smallest list index from the first schedulable SSB list; based on the fourth SSB, determining the available SSB symbol for the UE to perform uplink transmission.

In one example of the disclosure, the machine executable instructions also cause the processor to perform the following blocks:
before determining the available SSB symbol for the UE to perform uplink transmission based on the first schedulable SSB list, if there is a second schedulable SSB list, determining the available SSB symbol for the UE to perform uplink transmission based on a second schedulable SSB list, wherein the second schedulable list is updated based on measurement values of the cross link interference of the UE to other UEs; Otherwise, performing the operation of determining the available SSB symbol for the UE to perform uplink transmission based on the first schedulable SSB list.

In one example of the disclosure, the second schedulable SSB list is updated as follows:
calculating a sum of the measurement values of cross link interference by the UE to other UEs; if the sum is less than or equal to a first threshold value, the information of an schedulable SSB of the UE recorded in the first schedulable SSB list can be copied to the second schedulable SSB list; if the sum is greater than the first threshold value, the information of an schedulable SSB of the UE is removed from the second schedulable SSB list in the case where the information of an schedulable SSB of the UE has been recorded in the second schedulable SSB list.

In one example of the present disclosure, the machine executable instructions also cause the processor to perform the following blocks:
selecting a fifth SSB with a lowest list index from the second schedulable SSB list; based on the fifth SSB, determining the available SSB symbol for the UE to perform uplink transmission.

In one example of the disclosure, the machine executable instructions also cause the processor to perform the following blocks:
determining the available SSB symbol for the UE to perform uplink transmission from the SSB symbols that have not been used for uplink transmission in a previous SSB period based on the first schedulable SSB list.

In one example of the disclosure, the machine executable instructions also cause the processor to perform the following blocks:

sending a second RRC signaling carrying a rate matching parameter to the UE, to indicate the UE to perform uplink transmission in the available SSB symbol based on a target uplink transmission rate, wherein the target uplink transmission rate is obtained by performing rate matching on the SSB time-frequency resources of the available SSB symbol.

In one example, the processor may include one or more processing cores, such as a 4-core processor, an 8-core processor, and the like. The processor can be implemented in the form of at least one hardware from DSP (Digital Signal Processing), FPGA (Field-Programmable Gate Array), or PLA (Programmable Logic Array). The processor 711 can also include a main processor and a co-processor. The main processor is a processor used to process data in a wake-up state, also known as a Central Processing Unit (CPU); The co-processor is a low-power processor used to process data in standby mode. In some examples, the processor may be integrated with a GPU (Graphics Processing Unit), which is responsible for rendering and drawing the content that need to be displayed on the display.

In one example, the base station may also optionally include: a peripheral device interface and at least one peripheral device. The processor and peripheral device interface can be connected through a bus or signal line. Each peripheral device can be connected to the peripheral device interface through a bus, signal line, or circuit board. Peripheral devices may include at least one of radio frequency circuits and power supplies.

The RF circuit is to receive and transmit RF (Radio Frequency) signals, also known as electromagnetic signals. RF circuit communicates with communication networks and other communication devices through electromagnetic signals. The RF circuit converts electrical signals into electromagnetic signals for transmission, or converts the received electromagnetic signals into electrical signals. Optionally, the RF circuit includes an antenna system, a RF transceiver, one or more amplifiers, tuners, oscillators, digital signal processors, user identity module cards, and the like. The RF circuit can communicate with a UE through at least one wireless communication protocol. This wireless communication protocol includes but is not limited to: World Wide Web, Metropolitan Area Network, Intranet, various generations of mobile communication networks (2G, 3G, 4G, and 5G), wireless local area networks, and/or WiFi (Wireless Fidelity) networks.

The power supply is to power various components in the base station, which can be AC, DC, disposable batteries, or rechargeable batteries.

The beneficial effects corresponding to the above examples of each base station can be found in the section of the examples of methods applied to base stations, which will not be repeated here.

An example of the present disclosure also provides a UE, as shown in Fig. 19, which includes a processor 1901 and a machine-readable storage medium 1902. The machine-readable storage medium 1902 has machine executable instructions that can be executed by the processor 1901, and the machine executable instructions cause the processor 1901 to perform the following blocks:

receiving configuration information with respect to uplink transmission sent by a base station, wherein the configuration information is to indicate an available SSB symbol for the UE to perform uplink transmission, and the available SSB symbol is configured with an uplink subband;

receiving uplink scheduling information sent by the base station;

performing uplink transmission in the available SSB symbol based on the uplink scheduling information.

In one example of the present disclosure, the configuration information includes: an indication value of an available SSB, which is used to indicate whether SSB symbols included in the available SSB are all available SSB symbols.

In one example of the present disclosure, the machine executable instructions also cause the processor to perform the following blocks:

receiving a first RRC signaling sent by the base station;

the available SSB symbol is an SSB symbol included in the SSB corresponding to a second location in the first RRC signaling, and the second location is a location where the value of the SSB location configuration parameter is a first preset value.

In one example of the present disclosure, the configuration information includes: window information of an uplink subband protection window, wherein in the SSB symbol located in the uplink subband protection window and configured with an uplink subband, the priority of the uplink transmission is higher than that of the downlink transmission; the available SSB symbol is located in the uplink subband protection window indicated by the window information and is configured with an uplink subband.

In one example of the present disclosure, the configuration information further includes: activation indication

information, wherein the activation indication information is to indicate whether the uplink subband protection window is activated;

The available SSB symbol is located in a first window and is configured with uplink subband. The first window is: an activated window indicated by the activation indication information, and the first window belongs to the uplink subband protection window indicated by the window information.

An example of the present disclosure also provides another UE, which includes a processor and a machine-readable storage medium. The machine-readable storage medium has machine executable instructions that can be executed by the processor 2201, and the machine executable instructions cause the processor to perform the following blocks:

receiving uplink scheduling information sent by a base station, wherein the uplink scheduling information is determined based on an available SSB symbol, the available SSB symbol is the SSB symbol determined by a base station based on a first schedulable SSB list, the first schedulable SSB list is generated based on a first SSB, the first SSB is: an SSB whose signal quality characterization value has been reported by the UE, the signal quality characterization value characterizes a value obtained by the UE performing signal quality measurement on a received SSB signal;

performing uplink transmission in the available SSB symbol based on the uplink scheduling information.

In one example of the disclosure, the machine executable instructions also cause the processor to perform the following blocks:

performing signal quality measurement on the received SSB signal to obtain the signal quality characterization value; transmitting the obtained signal quality characterization value to the base station, so that the signal quality characterization value obtained by the base station generates the first schedulable SSB list.

In one example of the disclosure, the machine executable instructions also cause the processor to perform the following blocks:

measuring a measurement value of cross link interference generated by other UEs; sending the measurement value of the cross link interference to the base station, so that the base station updates a second schedulable SSB list based on the measurement value of the cross link interference.

In one example, the processor may include one or more processing cores, such as a 4-core processor, an 8-core processor, and the like. The processor can be implemented in the form of at least one hardware from DSP, FPGA and PLA. The processor may also include a main processor and a co-processor.

In one example, the UE also includes: a peripheral device interfaces and at least one peripheral device. The processor and peripheral device interface can be connected through a bus or signal line. Each peripheral device can be connected to the peripheral device interface through a bus, signal line, or circuit board. The peripheral devices may include at least one of a radio frequency circuit, a touch screen, a camera and a power supply.

The RF circuit is to receive and transmit RF signals, also known as electromagnetic signals. RF circuit communicates with communication networks and other communication devices through electromagnetic signals. The radio frequency circuit converts electrical signals into electromagnetic signals for transmission, or converts the received electromagnetic signals into electrical signals. Optionally, the RF circuit includes an antenna system, a RF transceiver, one or more amplifiers, tuners, oscillators, digital signal processors, user identity module cards, and the like. The RF circuit can communicate with a base station through at least one wireless communication protocol. This wireless communication protocol includes but is not limited to: World Wide Web, Metropolitan Area Network, Intranet, various generations of mobile communication networks, wireless local area networks, and/or WiFi networks.

The display screen is to display the UI (User Interface). The UI can include graphics, text, icons, videos, and any combination thereof. When the display screen is a touch screen display, the display screen also has the ability to collect touch signals on or above the surface of the display screen. The touch signal can be input as a control signal to the processor for processing. At this point, the display screen can also be to provide virtual buttons and/or virtual keyboards, also known as soft buttons and/or soft keyboards.

In some examples, the display screen can be one, arranged on the front panel of the UE ; In other examples, the display screen can be at least two, respectively arranged on different surfaces of the UE or in a folded design; In further examples, the display screen may be a flexible display screen located on a curved or folded surface of the UE. Even, the display screen can be set as a non-rectangular irregular shape, also known as an irregular screen. The display screen can be prepared using materials such as LCD (Liquid Crystal Display) and OLED (Organic Light Emitting Diode).

Camera component is to capture images or videos. Optionally, the camera component includes a front camera and a rear camera. Generally, the front camera is arranged on the front panel of the UE, and the rear camera is arranged on the back of the UE. In some examples, there are at least two rear cameras and they could be any one of a main camera, a camera with depth-of-field effect, a wide-angle camera, and a telephoto camera, to achieve the background blur function

by integrating the main camera and the camera with depth-of-field effect, to achieve panoramic shooting by integrating the main camera and the wild-angle camera, as well as virtual reality (VR) shooting function or other fusion shooting functions. In some examples, the camera component may also include a flash. The flash can be a monochrome temperature flash or a dual color temperature flash. Dual color temperature flash refers to the combination of warm flash and cold flash, which can be used for light compensation under different color temperatures.

The power supply is to supply power to various components in UE. The power supply can be AC, DC, disposable battery, or rechargeable battery. When the power supply includes a rechargeable battery, the rechargeable battery can be wired charging battery or wireless charging battery.

The above machine readable storage medium may include Random Access Memory (RAM) or Non Volatile Memory (NVM), such as at least one disk storage. Optionally, the memory can also be at least one storage device located far from the processor.

The processor can be a general-purpose processor, including a Central Processing Unit (CPU), a Network Processor (NP), and the like; It can also be a Digital Signal Processor (DSP), Application Specific Integrated Circuit (ASIC), Field-Programmable Gate Array (FPGA) or other programmable logic devices, discrete gates or transistor logic devices, or discrete hardware components.

Based on the same concept as the above method, an example of the present disclosure also provides a computer readable storage medium that stores machine executable instructions that, when called and executed by a processor, cause the processor to implement an uplink transmission method applied to a base station or a UE.

The machine readable storage medium can be any electronic, magnetic, optical or other physical storage device, and can contain or store information, such as executable instructions, data, and the like. For example, the machine readable storage medium may be: RAM, volatile memory, non-volatile memory, flash memory, storage drive (such as hard disk drive), solid state disk, any type of storage disk (such as optical disk, dvd, and the like), or similar storage medium, or their combination.

Based on the same concept as the above method, an example of the disclosure also provides a computer program product containing instructions, which cause the computer to execute the above uplink transmission method applied to a base station or a UE when it runs on the computer.

The apparatus, module or unit described in the above example can be implemented by a computer entity or a product with a certain function. A typical implementation device is a computer. The specific form of a computer can be a personal computer, laptop computer, cellular phone, camera phone, smart phone, personal digital assistant, media player, navigation device, e-mail receiving and sending device, game console, tablet computer, wearable device or any combination of these devices.

The beneficial effects corresponding to the above examples of each UE can be found in the section of the examples of methods applied to UEs, which will not be repeated here.

In the above examples, it can be realized in whole or in part by software, hardware, firm ware or any combination thereof. When implemented by software, it can be realized in the form of computer program products in whole or in part. The computer program product includes one or more computer instructions. When the computer program instruction is loaded and executed on the computer, the process or function described in the examples of the present disclosure is generated in whole or in part. The computer can be a general purpose computer, a special purpose computer, a computer network, or other programmable devices. The computer instruction can be stored in a computer-readable storage medium, or transferred from one computer-readable storage medium to another computer-readable storage medium. For example, the computer instruction can be transferred from a website, a computer, a server or data center to another website site, computer, server or data center in a wired (such as coaxial cable, optical fiber, digital subscriber line (DSL)) or wireless (such as infrared, wireless, microwave, and the like) manner. The computer-readable storage medium can be any available medium that can be accessed by a computer or a data storage device comprising a server, a data center and the like integrated with one or more available medium. The available medium can be magnetic medium (for example, floppy disk, hard disk, magnetic tape), optical medium (for example, DVD), or semiconductor medium (for example, solid state disk (SSD)).

It should be noted that in this disclosure, relational terms such as first and second are only to distinguish one entity or operation from another entity or operation, and do not necessarily require or imply any actual relationship or order between these entities or operations. Moreover, the terms "comprise", "include", or any other variation thereof are intended to encompass non-exclusive inclusion, such that a process, method, item, or device that comprises a series of elements not only comprises those elements, but also other elements that are not explicitly listed, or also comprise elements inherent in such a process, method, item, or device. Without further limitations, the elements limited by the statement "include one..." do not exclude the existence of other identical elements in the process, method, item, or device that comprises the elements.

Each example of the present description is described in a relevant manner, and the same and similar parts of each example can be referred to each other, and each example highlights the differences from other examples. In particular, for the examples of apparatuses, base station, UE and storage medium, since they are basically similar to the examples of

methods, the description is relatively simple. Reference can be made to the part of the description of the examples of methods for details.

What described above is only preferred examples of the present disclosure and is not intended to limit the scope of protection of the present disclosure. Any modification, equivalent replacement, improvement, and the like made within the spirit and principles of this disclosure shall be included in the scope of protection of this disclosure.

## Claims

1. An uplink transmission method, wherein it is applied to a base station, and the method comprises:

   determining configuration information with respect to uplink transmission, wherein the configuration information is to indicate an available SSB symbol for a UE to perform uplink transmission, and the available SSB symbol is configured with an uplink subband;
   sending the configuration information to the UE;
   sending uplink scheduling information to the UE so that the UE performs uplink transmission in the available SSB symbol based on the uplink scheduling information.

2. The method according to claim 1, wherein
   the configuration information includes: an indication value of an available SSB, the indication value is to indicate whether SSB symbols included in the available SSB are all available SSB symbols.

3. The method according to claim 2, wherein, determining the configuration information with respect to uplink transmission, comprises:

   determining candidate SSBs, wherein SSB symbols included in the candidate SSBs are all configured with an uplink subband;
   selecting an available SSB from the candidate SSBs;
   generating configuration information containing an indication value of the available SSB.

4. The method according to claim 2, wherein sending the configuration information to the UE, comprises:
   sending a first RRC signaling to the UE, wherein the first RRC signaling carries an SSB location configuration parameter, a value of a first location in the SSB location configuration parameter is set to a first preset value, and the first location is a location corresponding to the available SSB in the SSB location configuration parameter.

5. The method according to claim 1, wherein
   the configuration information comprises: window information of an uplink subband protection window, wherein in an SSB symbol located in the uplink subband protection window and configured with an uplink subband, a priority of the uplink transmission is higher than that of the downlink transmission.

6. The method according to claim 5, wherein
   the window information includes: a window identification, a window type and window location information.

7. The method according to claim 6, wherein
   the window location information includes: a period offset value representing a window period and an offset, a starting symbol of the window in a starting slot, and a window length.

8. The method according to claim 7, wherein a starting SFN and a starting slot of the uplink subband protection window are calculated according to the following formula:

$$\text{numberOfSlotsPerFrame} \times \text{SFN1} + \text{slot number in the frame} = [(\text{numberOfSlotsPerFrame} \times \text{SFN}_{\text{start}} + \text{offset}) + N \times \text{periodicity}]\,\text{modulo}\,(1024 \times \text{numberOfSlotsPerFrame})$$

   where numberOfSlotsPerFrame represents a total number of slots per frame, SFN1 represents the start SFN, slot number in the frame represents the start slot, $SFN_{start}$ represents a system frame number that takes effect after the uplink subband protection window configuration or reconfiguration, periodicity represents the window period included

in the period offset value, offset represents a window offset included in the period offset value, and N represents a serial number of the window period, modulo represents a modulo operation.

**9.** The method according to any one of claim 5-8, wherein
the configuration information further includes: activation indication information, wherein the activation indication information is to indicate whether the uplink subband protection window is activated.

**10.** The method according to claim 9, wherein the activation indication information is: a first MAC control element;
the first MAC control element includes: a MAC subheader, an identification of a serving cell on which the MAC control element acts, an identification of a bandwidth part on which the MAC control element acts, and a characterization value of whether each uplink subband protection window is activated.

**11.** The method according to claim 9, wherein the activation indication information is: a first DCI parameter;
the first DCI parameter includes the characterization value of whether each uplink subband protection window is activated.

**12.** An uplink transmission method, wherein it is applied to a base station, and the method comprises:

determining an available SSB symbol for a UE to perform uplink transmission based on a first schedulable SSB list;
based on the available SSB symbol, sending uplink scheduling information to the UE so that the UE performs uplink transmission in the available SSB symbol based on the uplink scheduling information.

**13.** The method according to claim 12, wherein
the first schedulable SSB list is generated based on a first SSB; the first SSB is: an SSB whose signal quality characterization value has been reported by the UE, and the signal quality characterization value characterizes a value obtained by the UE performing signal quality measurement on a received SSB signal.

**14.** The method according to claim 13, wherein the first SSB includes: an SSB corresponding to a first quality characterization value, wherein the first quality characterization value is the foremost first number of characterization values in the signal quality characterization values reported by the UE, sorted from largest to smallest;
the first schedulable SSB list is generated in the following manner:

determining a second SSB whose signal quality characterization value is not reported by the UE based on the first SSB;
generating the first schedulable SSB list, wherein the first schedulable list contains an SSB index of the second SSB, and SSB indexes are sorted from smallest to largest.

**15.** The method according to claim 13, wherein the first SSB comprises: SSBs corresponding to all signal quality characterization values measured by the UE;
the first schedulable SSB list is generated in the following manner:

determining a third SSB corresponding to a second signal quality characterization value, wherein the second signal quality characterization value is the foremost second number of characterization values in the signal quality characterization values reported by the UE, sorted from smallest to largest;
generating the first schedulable SSB list, wherein the first schedulable SSB list contains an SSB index of the third SSB, and SSB indexes are sorted from smallest to largest according to the corresponding signal quality characterization value of the SSB.

**16.** The method according to any one of claims 12-15, wherein determining the available SSB symbol for the UE to perform uplink transmission based on the first schedulable SSB list, comprises:

selecting a fourth SSB with a smallest list index from the first schedulable SSB list;
determining the available SSB symbol for the UE to perform uplink transmission based on the fourth SSB.

**17.** The method according to claim 12, wherein, before determining the available SSB symbol for the UE to perform uplink transmission based on the first schedulable SSB list, the method further comprises:

if there is a second schedulable SSB list, determining the available SSB symbol for the UE to perform uplink transmission based on the second schedulable SSB list, wherein the second schedulable list is updated based on measurement values of cross link interference by the UE to other UEs;
otherwise, performing the operation of determining the available SSB symbol for the UE to perform uplink transmission based on the first schedulable SSB list.

**18.** The method according to claim 17, wherein the second schedulable SSB list is updated in the following manner:

calculating a sum of the measurement values of the cross link interference by the UE to other UEs;
if the sum is less than or equal to a first threshold value, information of schedulable SSB of UE recorded in the first schedulable SSB list is copied to the second schedulable SSB list;
if the sum is greater than the first threshold value, in the case where the information of schedulable SSB of the UE has been recorded in the second schedulable SSB list, the information of schedulable SSB of the UE is removed from the second schedulable SSB list.

**19.** The method according to claim 18, wherein determining the available SSB symbol for the UE to perform uplink transmission based on the second schedulable SSB list, comprises:

selecting a fifth SSB with a smallest list index from the second schedulable SSB list;
determining the available SSB symbol for the UE to perform uplink transmission based on the fifth SSB.

**20.** The method according to claim 12, wherein determining the available SSB symbol for the UE to perform uplink transmission based on the first schedulable SSB list, comprises:
determining the available SSB symbol for the UE to perform uplink transmission from the SSB symbols that have not been used for uplink transmission in a previous SSB period based on the first schedulable SSB list.

**21.** The method according to claim 12, wherein the method further comprises:
sending a second RRC signaling carrying a rate matching parameter to the UE to indicate the UE to perform uplink transmission in the available SSB symbol according to a target uplink transmission rate, wherein the target uplink transmission rate is obtained by performing rate matching on SSB time-frequency resources of the available SSB symbol.

**22.** An uplink transmission method, wherein it is applied to a UE, and the method comprises:

receiving configuration information with respect to uplink transmission sent by a base station, wherein the configuration information is to indicate an available SSB symbol for the UE to perform uplink transmission, and the available SSB symbol is configured with an uplink subband;
receiving uplink scheduling information sent by the base station;
performing uplink transmission in the available SSB symbol based on the uplink scheduling information.

**23.** The method according to claim 22, wherein
the configuration information includes: an indication value of an available SSB, the indication value is to indicate whether SSB symbols included in the available SSB are all available SSB symbols.

**24.** The method according to claim 23, wherein
receiving the configuration information with respect to uplink transmission sent by the base station comprises:

receiving a first RRC signaling sent by the base station;
the available SSB symbol is an SSB symbol included in an SSB corresponding to a second location in the first RRC signaling, and the second location is a location where a value in an SSB location configuration parameter is a first preset value.

**25.** The method according to claim 22, wherein

the configuration information comprises: window information of an uplink subband protection window, wherein in an SSB symbol located in the uplink subband protection window and configured with an uplink subband, a priority of the uplink transmission is higher than that of the downlink transmission;
the available SSB symbol is located in an uplink subband protection window indicated by the window information

and is configured with an uplink subband.

**26.** The method according to claim 25, wherein

the configuration information further includes: activation indication information, wherein the activation indication information is to indicate whether the uplink subband protection window is activated;
the available SSB symbol is located in a first window and is configured with an uplink subband; the first window is: an activated window indicated by the activation indication information, and the first window belongs to the uplink subband protection window indicated by the window information.

**27.** An uplink transmission method, wherein it is applied to a UE, and the method comprises:

receiving uplink scheduling information sent by a base station, wherein the uplink scheduling information is determined based on an available SSB symbol, the available SSB symbol is an SSB symbol determined by the base station based on a first schedulable SSB list, the first schedulable SSB list is generated based on a first SSB, the first SSB is: an SSB whose signal quality characterization value has been reported by the UE, the signal quality characterization value characterizes the value obtained by the UE performing signal quality measurement on a received SSB signal;
performing uplink transmission in the available SSB symbol based on the uplink scheduling information.

**28.** The method according to claim 27, wherein the method further comprises:

performing signal quality measurement on the received SSB signal to obtain the signal quality characterization value;
transmitting the obtained signal quality characterization value to the base station, so that the signal quality characterization value obtained by the base station generates the first schedulable SSB list.

**29.** The method according to claim 27, wherein the method further comprises:

measuring a measurement value of cross link interference generated by other UEs;
sending the measurement value of the cross link interference to the base station, so that the base station updates a second schedulable SSB list based on the measurement value of the cross link interference.

**30.** An uplink transmission apparatus, wherein it is applied to a base station, and the apparatus comprises:

a configuration information determining module, to determine configuration information with respect to uplink transmission, wherein the configuration information is to indicate an available SSB symbol for a UE to perform uplink transmission, and the available SSB symbol is configured with an uplink subband;
a configuration information sending module, to send the configuration information to the UE;
a first scheduling information sending module, to send uplink scheduling information to the UE so that the UE performs uplink transmission in the available SSB symbol based on the uplink scheduling information.

**31.** The apparatus according to claim 30, wherein
the configuration information includes: an indication value of an available SSB, the indication value is to indicate whether SSB symbol included in the available SSB are all available SSB symbols.

**32.** The apparatus according to claim 31, wherein
the configuration information determining module is specifically to determine candidate SSBs, wherein SSB symbols included in the candidate SSBs are all configured with an uplink subband; select an available SSB from the candidate SSBs; and generate configuration information containing the indication value of the available SSB.

**33.** The apparatus according to claim 31, wherein
the configuration information sending module is specifically to send a first RRC signaling to the UE, wherein the first RRC signaling carries an SSB location configuration parameter, a value of a first location in the SSB location configuration parameter is set to a first preset value, and the first location is a location corresponding to the available SSB in the SSB location configuration parameter.

**34.** The apparatus according to claim 30, wherein

the configuration information comprises: window information of an uplink subband protection window, wherein in an SSB symbol located in the uplink subband protection window and configured with an uplink subband, a priority of the uplink transmission is higher than that of the downlink transmission.

**35.** The apparatus according to claim 34, wherein
the window information includes: a window identification, a window type and window location information.

**36.** The apparatus according to claim 35, wherein
the window location information includes: a period offset value representing a window period and an offset, a starting symbol of the window in a starting slot, and a window length.

**37.** The apparatus according to claim 36, wherein a starting system frame number SFN and a starting slot of the uplink subband protection window are calculated according to the following formula:

$$\text{numberOfSlotsPerFrame} \times \text{SFN1} + \text{slot number in the frame} = [(\text{numberOfSlotsPerFrame} \times \text{SFN}_{\textbf{start}} + \text{offset}) + \text{N} \times \text{periodicity}]\,\text{modulo}\,(1024 \times \text{numberOfSlotsPerFrame})$$

where numberOfSlotsPerFrame represents a total number of slots per frame, SFN1 represents the starting SFN, slot number in the frame represents the starting slot, $SFN_{start}$ represents a system frame number that takes effect after the uplink subband protection window configuration or reconfiguration, periodicity represents the window period included in the period offset value, offset represents a window offset included in the period offset value, and N represents a serial number of the window period, modulo represents a modulo operation.

**38.** The apparatus according to any one of claim 34-37, wherein
the configuration information further includes: activation indication information, wherein the activation indication information is to indicate whether the uplink subband protection window is activated.

**39.** The apparatus according to claim 38, wherein the activation indication information is: a first MAC control element; the first MAC control element includes: a MAC subheader, an identification of a serving cell on which the MAC control element acts, an identification of a bandwidth part on which the MAC control element acts, and an characterization value of whether each uplink subband protection window is activated.

**40.** The apparatus according to claim 38, wherein the activation indication information is: a first DCI parameter;
the first DCI parameter includes the characterization value of whether each uplink subband protection window is activated.

**41.** An uplink transmission apparatus, wherein it is applied to a base station, and the apparatus comprises:

a first available SSB symbol determining module, to determine an available SSB symbol for a UE to perform uplink transmission based on a first schedulable SSB list;
a second scheduling information sending module, to send uplink scheduling information to the UE so that the UE performs uplink transmission in the available SSB symbol based on the uplink scheduling information.

**42.** The apparatus according to claim 41, wherein
the first schedulable SSB list is generated based on a first SSB; the first SSB is: an SSB whose signal quality characterization value has been reported by the UE, and the signal quality characterization value characterizes a value obtained by the UE performing signal quality measurement on a received SSB signal.

**43.** The apparatus according to claim 42, wherein the first SSB includes: an SSB corresponding to a first quality characterization value, wherein the first quality characterization value is the foremost first number of characterization values in the signal quality characterization values reported by the UE, sorted from largest to smallest;
the first schedulable SSB list is generated in the following manner:
determining a second SSB whose signal quality characterization value is not reported by the UE based on the first SSB; generating the first schedulable SSB list, wherein the first schedulable list contains an SSB index of the second SSB, and SSB indexes are sorted from smallest to largest.

**44.** The apparatus according to claim 42, wherein the first SSB comprises: SSBs corresponding to all signal quality characterization values measured by the UE;
the first schedulable SSB list is generated in the following manner:
determining a third SSB corresponding to a second signal quality characterization value, wherein the second signal quality characterization value is the foremost second number of characterization values in the signal quality characterization values reported by the UE, sorted from smallest to largest; generating the first schedulable SSB list, wherein the first schedulable SSB list contains an SSB index of the third SSB, and SSB indexes are sorted from smallest to largest according to the corresponding signal quality characterization value of the SSB.

**45.** The apparatus according to any one of claim 41-44, wherein
the first available SSB symbol determining module is specifically to select a fourth SSB with a smallest list index from the first schedulable SSB list; based on the fourth SSB, determine the available SSB symbol for the UE to perform uplink transmission.

**46.** The apparatus according to claim 41, wherein the apparatus further comprises:
a second available SSB symbol determining module, to determine the available SSB symbols for the UE to perform uplink transmission based on a second schedulable SSB list if there is a second schedulable SSB list, wherein the second schedulable list is updated based on measurement values of cross link interference by the UE to other UEs; otherwise, the first available SSB symbol determining module is triggered.

**47.** The apparatus according to claim 46, wherein the second schedulable SSB list is updated in the following manner:
calculating a sum of the measurement values of the cross link interference by the of UE to other UEs; if the sum is less than or equal to a first threshold value, information of an schedulable SSB of the UE recorded in the first schedulable SSB list is copied to the second schedulable SSB list; if the sum is greater than the first threshold value, in the case where the information of schedulable SSB of the UE has been recorded in the second schedulable SSB list, the information of schedulable SSB of the UE is removed from the second schedulable SSB list.

**48.** The apparatus according to claim 46, wherein
the second available SSB symbol determining module is specifically to select a fifth SSB with a smallest list index from the second schedulable SSB list; based on the fifth SSB, determine the available SSB symbol for the UE to perform uplink transmission.

**49.** The apparatus according to claim 41, wherein
the first available SSB symbol determining module is specifically to determine the available SSB symbol the UE to perform uplink transmission from the SSB symbols that have not been used for uplink transmission in a previous SSB period based on the first schedulable SSB list.

**50.** The apparatus according to claim 41, wherein the apparatus further comprises:
a RRC signaling sending module, to send a second RRC signaling carrying a rate matching parameter to the UE to indicate the UE to perform uplink transmission in the available SSB symbol according to a target uplink transmission rate, wherein the target uplink transmission rate is obtained by performing rate matching on SSB time-frequency resources of the available SSB symbol.

**51.** An uplink transmission apparatus, wherein it is applied to a UE, and the apparatus comprises:

a configuration information receiving module, to receive configuration information with respect to uplink transmission sent by a base station, wherein the configuration information is to indicate an available SSB symbol for the UE to perform uplink transmission, and the available SSB symbol is configured with an uplink subband;
a first scheduling information receiving module, to receive uplink scheduling information sent by the base station;
a first uplink transmission module, to perform uplink transmission in the available SSB symbol based on the uplink scheduling information.

**52.** The apparatus according to claim 51, wherein
the configuration information includes: an indication value of an available SSB, the indication value is to indicate whether SSB symbols included in the available SSB are all available SSB symbols.

**53.** The apparatus according to claim 52, wherein

the configuration information receiving module is specifically to receive a first RRC signaling sent by the base station;
the available SSB symbol is an SSB symbol included in an SSB corresponding to a second location in the first RRC signaling, and the second location is a location where a value in an SSB location configuration parameter is a first preset value.

**54.** The apparatus according to claim 51, wherein

the configuration information comprises: window information of an uplink subband protection window, wherein in an SSB symbol located in the uplink subband protection window and configured with an uplink subband, a priority of the uplink transmission is higher than that of the downlink transmission;
the available SSB symbol is located in an uplink subband protection window indicated by the window information and is configured with an uplink subband.

**55.** The apparatus according to claim 54, wherein

the configuration information further includes: activation indication information, wherein the activation indication information is to indicate whether the uplink subband protection window is activated;
the available SSB symbol is located in a first window and is configured with an uplink subband; the first window is: an activated window indicated by the activation indication information, and the first window belongs to the uplink subband protection window indicated by the window information.

**56.** An uplink transmission apparatus, wherein it is applied to a UE, and the apparatus comprises:

a second scheduling information receiving module, to receive uplink scheduling information sent by a base station, wherein the uplink scheduling information is determined based on an available SSB symbol, the available SSB symbol is an SSB symbol determined by the base station based on a first schedulable SSB list, the first schedulable SSB list is generated based on a first SSB, the first SSB is: an SSB whose signal quality characterization value has been reported by the UE, the signal quality characterization value characterizes the value obtained by the UE performing signal quality measurement on a received SSB signal;
a second uplink transmission module, to perform uplink transmission in the available SSB symbol based on the uplink scheduling information.

**57.** The apparatus according to claim 56, wherein the apparatus further comprises:

a signal quality measuring module, to perform signal quality measurement on the received SSB signal to obtain the signal quality characterization value;
a signal quality characterization value transmission module, to transmit the obtained signal quality characterization value to the base station, so that the signal quality characterization value obtained by the base station generates the first schedulable SSB list.

**58.** The apparatus according to claim 56, wherein the apparatus further comprises:

an interference measuring module, to measure a measurement value of cross link interference generated by other UEs;
an interference measurement value sending module, to send the measurement values of cross link interference to the base station, so that the base station updates a second schedulable SSB list based on the measurement values of cross link interference.

**59.** A base station, wherein comprising a processor and a machine-readable storage medium; the machine-readable storage medium stores machine executable instructions that are executable by the processor; the processor is caused by the machine executable instructions to implement the method operations according to any one of claims 1-11 or 12-21.

**60.** A UE, wherein comprising a processor and a machine-readable storage medium; the machine-readable storage medium stores machine executable instructions that are executable by a processor; the machine executable instructions cause the processor to implement the method operation according to any one of claims 22-26 or 27-29.

**61.** A computer readable storage medium, wherein machine executable instructions are store therein, when called and executed by a processor, the machine executable instructions cause the processor to implement the method operations according to any one of claims 1-11 or 12-21 or 22-26 or 27-29.

**62.** A computer program product, wherein the computer program product causes a processor to implement the method according to any one of claims 1-11 or 12-21 or 22-26 or 27-29.

frame structure
slot
0
1
2
3
......
16
17
18
19
sym bol
0
1
2
3
......
10
11
12
13

Fig.1

S201
determining configuration information with respect to uplink transmission
S202
sending the configuration information to the UE
S203
sending uplink scheduling information to the UE so that the UE can perform uplink transmission in the available SSB symbol based on the uplink scheduling information

Fig.2

S301
receiving configuration information with respect to uplink transmission sent by a base station
S302
receiving uplink scheduling information sent by the base station
S303
performing uplink transmission in the available SSB symbol based on the uplink scheduling information

Fig.3

base station
UE
S401: determining configuration information with respect to uplink transmission
S402: sending the configuration information to a UE
S403: receiving the configuration information with respect to uplink transmission sent by the base station
S404: sending uplink scheduling information to the UE
S405: receiving the uplink scheduling information sent by the base station
S406: performing uplink transmission in an available SSB symbol based on the uplink scheduling information

Fig.4

base station
UE
S501: determining configuration information including an indication value of an available SSB
S502: sending the configuration information to the UE
S503: receiving the configuration information with respect to uplink transmission sent by the base station
S504: sending uplink scheduling information to the UE
S505: receiving the uplink scheduling information sent by the base station
S506: performing uplink transmission in the available SSB symbol based on the uplink scheduling information

Fig.5

Fig. 6

base station
UE
S701: determining configuration information including window information of an uplink subband protection window
S702: sending the configuration information to UE
S703: receiving the configuration information with respect to uplink transmission sent by the base station
S704: sending uplink scheduling information to the UE
S705: receiving the uplink scheduling information sent by the base station
S706: performing uplink transmission in the available SSB symbol based on the uplink scheduling information

Fig.7

| 0 | 1 | 2 | 3 | 4 | 5 | 6 | 7 | Oct1 |
|---|---|---|---|---|---|---|---|---|
| R | serving cell ID | | | | | BWP ID | | |
| S7 | S6 | S5 | S4 | S3 | S2 | S1 | S0 | Oct2 |

Fig.8

uplink subband protection window

| Col 1 | Col 2 | Col 3 | Col 4 | Col 5 | Col 6 | Col 7 | Col 8 | Col 9 | Col 10 | Col 11 | Col 12 | Col 13 | Col 14 | Col 15 | Col 16 | Col 17 | Col 18 | Col 19 | Col 20 | Col 21 | Col 22 | Col 23 |
|---|---|---|---|---|---|---|---|---|---|---|---|---|---|---|---|---|---|---|---|---|---|---|
| slot | 0 | 1 | 2 | 3 | 4 | ··· | 15 | 16 | 17 | 18 | 19 | 0 | 1 | 2 | 3 | 3 | ··· | 15 | 16 | 17 | 18 | 19 | ··· |
| PRB | D SSB uplink subband | D SSB uplink subband | D uplink subband | S | U | ··· | D uplink subband | D uplink subband | D uplink subband | S | U | D SSB uplink subband | D SSB uplink subband | D uplink subband | S | U | ··· | D uplink subband | D uplink subband | D uplink subband | S | U | ··· |

| Col 1 | Col 2 | Col 3 | Col 4 | Col 5 | Col 6 | Col 7 | Col 8 | Col 9 | Col 10 | Col 11 | Col 12 | Col 13 | Col 14 | Col 15 | Col 16 | Col 17 | Col 18 | Col 19 | Col 20 | Col 21 | Col 22 | Col 23 |
|---|---|---|---|---|---|---|---|---|---|---|---|---|---|---|---|---|---|---|---|---|---|---|
| slot | 0 | 1 | 2 | 3 | 4 | ··· | 15 | 16 | 17 | 18 | 19 | 0 | 1 | 2 | 3 | 3 | ··· | 15 | 16 | 17 | 18 | 19 | ··· |
| PRB | D SSB uplink subband | D SSB uplink subband | D uplink subband | S | U | ··· | D uplink subband | D uplink subband | D uplink subband | S | U | D SSB uplink subband | D SSB uplink subband | D uplink subband | S | U | ··· | D uplink subband | D uplink subband | D uplink subband | S | U | ··· |

uplink subband protection window

Fig. 9

S1001
determining an available SSB symbol for a UE to perform uplink transmission based on a first schedulable SSB list
S1002
sending uplink scheduling information to the UE based on the available SSB symbol, such that the UE can perform uplink transmission in the available SSB symbol based on the uplink scheduling information

Fig.10

S1101
receiving uplink scheduling information sent by a base station
S1102
performing uplink transmission in the available SSB symbol based on the uplink scheduling information

Fig.11

base station
UE
S1201: performing signal quality measurement on a received SSB signal to obtain a signal quality characterization value
S1202: sending the obtained signal quality characterization value to the base station
S1203: generating a first schedulable SSB list based on the signal quality characterization value
S1204: determining an available SSB symbol for the UE to perform uplink transmission based on the first schedulable SSB list
S1205: sending uplink scheduling information to the UE based on the available SSB symbol
S1206: receiving the uplink scheduling information sent by the base station
S1207: performing uplink transmission in the available SSB symbol based on the uplink scheduling information

Fig.12

base station
UE
S1301: performing signal quality measurement on a received SSB signal to obtain the signal quality characterization value
S1302: sending the obtained signal quality characterization value to the base station
S1303: measuring a cross link interference value generated by other UEs
S1304: sending the measurement value of the cross link interference to the base station
S1305: determining the measurement value of the cross link interference of UE to other UEs
S1306: generating the first schedulable SSB list based on the signal quality characterization value, and updating the second schedulable SSB list based on the measurement value of cross link interference by the UE to other UEs
S1307: determining that there is a second schedulable SSB list, and determining the available SSB symbol for the UE to perform uplink transmission based on the second schedulable SSB list
Step S1308: sending uplink scheduling information to the UE based on available SSB symbol
Step S1309: receiving uplink scheduling information sent by the base station
Step S1310: performing uplink transmission in the available SSB symbol based on the uplink scheduling information

Fig.13

base station
SSB0
SSB1
SSB2
SSB3
SSB4
SSB5
UE0
UE1
UE2
CLI
CLI
CLI

Fig.14

configuration information determining module
configuration information sending module
first scheduling information sending module
1501
1502
1503

Fig.15

first available SSB symbol determining module
second scheduling information sending module
1601
1602

Fig.16

configuration information receiving module
first scheduling information receiving module
first uplink transmission module
1701
1702
1703

Fig.17

second scheduling information receiving module
second uplink transmission module
1801
1802

Fig.18

processor
1901
machine-readable storage medium
1902
processor
2001
machine-readable storage medium
2002

Fig.19

Fig.20

INTERNATIONAL SEARCH REPORT

International application No.
**PCT/CN2023/142511**

**A. CLASSIFICATION OF SUBJECT MATTER**

H04W 72/0446(2023.01)i; H04W 72/1268(2023.01)i

According to International Patent Classification (IPC) or to both national classification and IPC

**B. FIELDS SEARCHED**

Minimum documentation searched (classification system followed by classification symbols)

IPC: H04W H04Q H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: SBFD, 子带全双工, 上行, 上行子带, SSB, 同步信号块, 保护窗口, 优先级, uplink subband, protection window, priority

**C. DOCUMENTS CONSIDERED TO BE RELEVANT**

| Category* | Citation of document, with indication, where appropriate, of the relevant passages | Relevant to claim No. |
|---|---|---|
| X | CN 117044352 A (BEIJING XIAOMI MOBILE SOFTWARE CO., LTD.) 10 November 2023 (2023-11-10)<br>description, paragraphs [0145]-[0250] | 1-4, 12-24, 27-33, 41-53, 56-62 |
| A | CN 111699747 A (HUAWEI TECHNOLOGIES CO., LTD.) 22 September 2020 (2020-09-22)<br>entire document | 1-62 |
| A | WO 2022237143 A1 (SPREADTRUM COMMUNICAITONS (SHANGHAI) CO., LTD.) 17 November 2022 (2022-11-17)<br>entire document | 1-62 |
| A | INTERDIGITAL, INC. "Duplex Operation for RedCap UEs"<br>*3GPP TSG RAN WG1 #107-e, R1-2111964,* 19 November 2021 (2021-11-19),<br>entire document | 1-62 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 August 2024** | **21 August 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/142511**

| Patent document cited in search report | Publication date (day/month/year) | Patent family member(s) | Publication date (day/month/year) |
|---|---|---|---|
| CN 117044352 A | 10 November 2023 | None | |
| CN 111699747 A | 22 September 2020 | WO 2019157731 A1 | 22 August 2019 |
| WO 2022237143 A1 | 17 November 2022 | CN 115412867 A | 29 November 2022 |

Form PCT/ISA/210 (patent family annex) (July 2022)